# EUROPEAN PATENT APPLICATION

(11) **EP 4 825 661 A1**
(43) Date of publication of application: **21.10.2026**
(21) Application number: 24945693.0
(22) Date of filing: 18.06.2024
(51) Int. Cl.: B60Q 1/24, B60Q 1/14, B60W 40/02, G06V 20/62

(54) **VEHICLE FOR CONTROLLING LAMP FOR IMPROVING OBJECT RECOGNITION**

(71) Applicant: LG Electronics Inc., Yeongdeungpo-gu Seoul 07336 (KR)
(72) Inventor: JEONG, Jiyoung, Seoul 06772 (KR); JEONG, Dongman, Seoul 06772 (KR)
(74) Representative: Vossius & Partner Patentanwälte Rechtsanwälte mbB
(86) International application number: PCT/KR2024/008388
(87) International publication number: WO 2025/263648

(57) **Abstract**

This lamp control unit comprises: an interface operably coupled with an electronic control unit (ECU) of a vehicle; and a processor configured to receive control information of a headlamp from the ECU via the interface. The processor may instruct an ADAS determination unit to determine, on the basis of an image of an object acquired from a front camera, the object in the image, receive control information of a headlamp for irradiation toward the object from the ECU, and, on the basis of the control information, turn off the headlamp or reduce the brightness of the headlamp so as to correspond to a frame in which an image of the object is acquired by means of the front camera.

## Description

### Technical Field

The present disclosure relates to a vehicle that performs lamp control. More particularly, the present disclosure relates to a vehicle that performs lamp control for improving object recognition.

### Background Art

A vehicle is an apparatus that transports a user in a direction desired by the user. In recent years, there has been a trend toward the vehicle being equipped with various sensors, electronic devices, and the like to ensure the convenience of the user who uses the vehicle. In particular, research on the Advanced Driver Assistance System (ADAS) has been actively conducted to enhance the user convenience in vehicle operation. Furthermore, the development of autonomous vehicles has been actively conducted.

The vehicle can detect an object located ahead using a camera. In this regard, a headlamp of the vehicle can emit light toward the object located ahead of the vehicle. In this regard, in U.S. Patent No. 10086832B2, there is disclosed a method of illuminating an object, located ahead of a vehicle, with light from a lamp to accurately recognize the object when a Time to Collision (TTC) with the object is below a reference value. In addition, in Korean Patent Application Publication No. 10-2013-0063566, there is disclosed a camera device and an in-vehicle system including a direction-switchable headlamp. In this regard, in a case where an object located ahead of a vehicle is recognized by a radar, but not by a camera device, the illumination direction of a headlamp is switched to provide a sufficient amount of light to a region in which the object located ahead is present.

In this regard, when the headlamp illuminates an object with light in order for a front camera of the vehicle to recognize the object, the object illuminated with light is easily recognizable. However, in a case where a special circumstance arises, the headlamp may interfere with object recognition. In this case, there is a need to capture an image by appropriately adjusting the brightness of the headlamp depending on the situation and by opening a camera shutter with the adjusted brightness of the headlamp.

### Disclosure of Invention

### Technical Problem

An object of the present disclosure is to appropriately adjust the brightness of a headlamp depending on the situation and capture an image by opening a camera shutter with the adjusted brightness of the headlamp in a case where the headlamp interferes with object recognition.

Another object of the present disclosure is to improve the performance of recognition of an object by a camera by adjusting a specific frame of a headlamp.

A further object of the present disclosure is to optimally improve the performance of recognition of an object while maintaining an existing headlamp function.

Another object of the present disclosure is to improve the performance of recognition of an object by a front camera of a vehicle by turning off a headlamp at an appropriate timing when a streetlamp is in an on state.

Still another object of the present disclosure is to improve the performance of recognition of objects, such as a vehicle located ahead and a pedestrian, by selectively adjusting the brightness of a headlamp according to respective brightness states of a vehicular road and a pedestrian road.

The present disclosure is not limited to the above-mentioned objects. From the following descriptions, other objects not mentioned will be apparent to a person of ordinary skill in the art to which the present disclosure pertains.

### Solution to Problem

To accomplish the above-mentioned objects, according to the present disclosure, there is provided a lamp control unit including: an interface operatively coupled to an electronic control unit (ECU) of a vehicle; and a processor configured to receive control information of a headlamp from the ECU through the interface. The processor controls an ADAS determination unit in such a manner that, based on an image of an object that is acquired from a front camera, the ADAS determination unit determines the object within the image, receives the control information of the headlamp for irradiation toward the object from the ECU, and turns off the headlamp or reduces the brightness thereof on the basis of the control information of the headlamp in such a manner that said turning off the headlamp or reducing the brightness thereof corresponds to a frame in which the front camera captures the image of the object.

According to an embodiment, in the lamp control unit, ADAS determination information on the object determined by the ADAS determination unit may be transmitted to the ECU of the vehicle. The control information of the headlamp, generated by the ECU according to the ADAS determination information, may be transmitted to the headlamp control unit. The processor may control the headlamp on the basis of the control information in such a manner that during the frame, the headlamp is turned off or has a reduced brightness.

According to an embodiment, in the lamp control unit, the processor may set a brightness control interval of the headlamp in such a manner that the headlamp is turned off or has a reduced brightness during a frame interval during which the image of the object is captured by the camera. The staring point of the brightness control interval may be set to be earlier than the starting point of the frame interval. The ending point of the brightness control interval may be set to be later than the ending point of the frame interval.

According to an embodiment, in the lamp control unit, the processor may control a first frame of the brightness control interval in such a manner that a plurality of light-emitting elements are all in an on state during a first interval preceding the frame interval, may control a second frame of the brightness control interval in such a manner that the plurality of light-emitting elements are all in an off state during the frame interval, and may control a third frame of the brightness control interval in such a manner that the plurality of light-emitting elements are all in the on state during a second interval following the frame interval.

According to an embodiment, in the lamp control unit, the processor may form continuous frames of the brightness control interval in such a manner that a plurality of light-emitting elements are all in an off state during a plurality of intervals that include the frame interval.

According to an embodiment, in the lamp control unit, the processor may control a first frame of the brightness control interval in such a manner that a plurality of light-emitting elements are all in an on state during a first interval preceding the frame interval, may control a second frame of the brightness control interval in such a manner that adjacent light-emitting elements, among the plurality of light-emitting elements, are turned off during the frame interval, and may control a third frame of the brightness control interval in such a manner that the plurality of light-emitting elements are all in the on state during a second interval following the frame interval.

According to an embodiment, in the lamp control unit, the processor may control a first frame of the brightness control interval in such a manner that a plurality of light-emitting elements are all in an on state during a first interval preceding the frame interval, may control a second frame of the brightness control interval in such a manner that light-emitting elements that are not adjacent to each other, among the plurality of light-emitting elements, are turned off during the frame interval, and may control a third frame of the brightness control interval in such a manner that the plurality of light-emitting elements are all in the on state during a second interval following the frame interval.

According to an embodiment, in the lamp control unit, the processor may control a first frame of the brightness control interval in such a manner that a plurality of light-emitting elements are all in an on state during a first interval preceding the frame interval, may control a second frame of the brightness control interval in such a manner that the plurality of light-emitting elements are all in an off state during the frame interval, and may control a third frame of the brightness control interval in such a manner that the brightness of each of the plurality of light-emitting elements is reduced to a greater extent during a second interval following the frame interval than in the on state. In the lamp control unit, the processor may control a fourth frame of the brightness control interval in such a manner that the plurality of light-emitting elements are all in the on state during a third interval following the second interval.

According to an embodiment, in the lamp control unit, the processor may control a first frame of the brightness control interval in such a manner that a plurality of light-emitting elements are all in an on state during a first interval preceding the frame interval, may control a second frame of the brightness control interval in such a manner that one of the plurality of light-emitting elements is turned off during the frame interval, and may control a third frame of the brightness control interval in such a manner that the brightness of one of the plurality of light-emitting elements is reduced to a greater extent during a second interval following the frame interval than in the on state. In the lamp control unit, the processor may control a fourth frame of the brightness control interval in such a manner that the plurality of light-emitting elements are all in the on state during a third interval following the second interval. In the lamp control unit, the one of the plurality of light-emitting elements may be configured to irradiate light toward a specific object of a vehicle located ahead of the vehicle.

According to an embodiment, in the lamp control unit, the processor may control a first frame of the brightness control interval in such a manner that a plurality of light-emitting elements are all in an on state during a first interval preceding the frame interval, may control a second frame of the brightness control interval in such a manner that during the frame interval, some of the plurality of light-emitting elements are in a first brightness state and the other light-emitting elements are in a second brightness state, and may control a third frame of the brightness control interval in such a manner that the plurality of light-emitting elements are all in the on state during a second interval following the frame interval. In the lamp control unit, some of the plurality of light-emitting elements may be arranged in a central portion of the headlamp, and the other light-emitting elements may be arranged in a peripheral portion of the headlamp.

According to an embodiment, in the lamp control unit, when it is determined that external illumination is present, the processor may control the headlamp to be in an off state during the frame interval, and, when it is determined that the external illumination is absent, the processor may control the headlamp to be in an on state or to have brightness reduced to a greater extent than in the on state during the frame interval.

According to an embodiment, in the lamp control unit, when the brightness of the external illumination is lower than a threshold brightness, the processor may control the headlamp to have brightness reduced to a greater extent than in the on state during the frame interval, and, when the brightness of the external illumination is higher than the threshold brightness, the processor may control the headlamp to be in the off state during the frame interval.

According to an embodiment, in the lamp control unit, the processor may control some of the plurality of light-emitting elements that correspond to a first region in which a pedestrian road is present, in such a manner as to be in an on state during the frame interval, and may control the other light-emitting elements that correspond to a second region in which a vehicular road is present, in such a manner as to be in an off state during the frame interval.

According to an embodiment, in the lamp control unit, the processor may control a central portion of the headlamp that corresponds to a second region of a vehicular road, in such a manner as to be in an on state to detect a different vehicle located ahead of the vehicle during a first interval preceding the frame interval, may control a peripheral portion of the headlamp that corresponds to a first region corresponding to a pedestrian road, in such a manner as to be in the on state to detect a pedestrian during the frame interval in which an image of the different vehicle is captured, and may control the central portion of the headlamp that corresponds to the second region of the vehicular road in such a manner as to be in an off state during the frame interval.

Specific details of other embodiments are included in the detailed description and the accompanying drawings.

### Advantageous Effects of Invention

The technical features of a vehicle that performs lamp control for improving object recognition according to the present disclosure are summarized as follows.

According to the present disclosure, the timing for a shutter of a camera and the timing for a specific frame of a headlamp can be adjusted, thereby adjusting the specific frame of the headlamp and improving the performance of recognition of an object by the camera.

According to the present disclosure, the timing for the shutter of the camera and the timing for the specific frame of the headlamp can be set to be the same, or the timing for the specific frame can be set to be advanced by a predetermined time, thereby optimally improving the performance of object recognition.

According to the present disclosure, when a streetlamp is turned on, the headlamp can be turned off at an appropriate point in time before a shutter-opening operation of a front camera, thereby improving the performance of object recognition by a front camera of the vehicle.

According to the present disclosure, a plurality of light-emitting elements of the headlamp can be selectively controlled to have respective brightness on a region-by-region basis according to respective brightness states of a vehicular road and a pedestrian road, thereby improving the performance of recognition of objects, such as a vehicle located ahead and a pedestrian.

According to the present disclosure, since only a specific frame associated with brightness control of the headlamp is changed, only the object recognition capability of the camera can be improved, without affecting the existing headlamp system familiar to the user while complying with automotive headlamp regulations.

The present disclosure is not limited to the above-mentioned effects. From the detailed description and the claims, other effects not mentioned will be apparent to a person of ordinary skill in the art to which the present disclosure pertains.

### Brief Description of Drawings

FIG. 1 is a view illustrating the exterior of a vehicle according to an embodiment of the present disclosure.
FIG. 2 is a view illustrating the vehicle according to the embodiment of the present disclosure when viewed at various exterior angles.
FIGS. 3 and 4 are views each illustrating various objects related to driving the vehicle according to the embodiment of the present disclosure.
FIG. 5 is a block diagram that is referenced to describe the vehicle according to the embodiment of the present disclosure.
FIG. 6 is a block diagram illustrating a vehicle that performs lamp control for improving object recognition according to the present disclosure.
FIG. 7 is a set including a timing diagram illustrating a light-emitting pattern of a lamp control unit according to the present disclosure, and illustrating a shutter-opening timing for a front camera, and a view illustrating a lamp pattern and an object pattern at each point in time during shutter opening.
FIG. 8 is a flowchart illustrating a lamp control method for improving object recognition of the vehicle according to the present disclosure.
FIG. 9 is a diagram illustrating the lamp control method configured to drive a lamp control unit after the front camera according to the present disclosure captures an image.
FIG. 10 is a set of views illustrating patterns associated with the brightness control and the pattern control according to embodiments.
FIG. 11 is a set of comparison views illustrating images that are captured based on the presence or absence of streetlamp light and changes in the brightness of a headlamp according to embodiments.
FIGS. 12A and 12B are two sets of views, each set including views illustrating an embodiment in which an object recognition region is set within an image including a vehicular road and a background.
FIG. 13 is a timing diagram associated with the lamp control unit and on/off operation of the front camera in FIG. 6.
FIG. 14A is a set including a timing diagram illustrating that a brightness control interval of the lamp is set using a discontinuous-frame control method, and a view illustrating respective light-emitting patterns of light-emitting elements.
FIG. 14B is a set including a timing diagram illustrating that the brightness control interval of the lamp is set using a continuous-frame control scheme, and a view illustrating respective light-emitting patterns of the light-emitting elements.
FIG. 15A is a set including a timing diagram illustrating that only some adjacent light-emitting elements are in the off state, and a view illustrating respective light-emitting patterns of the light-emitting elements.
FIG. 15B is a set including a timing diagram illustrating that only some spaced-apart light-emitting elements are turned off, and a view illustrating respective light-emitting patterns of the light-emitting elements.
FIG. 16A is a set including a timing diagram illustrating that dimming control is executed in such a manner that the brightness of each of the light-emitting elements is reduced, and a view illustrating respective light-emitting patterns of the light-emitting elements.
FIG. 16B is a set including a timing diagram illustrating that dimming control is executed in such a manner that the brightness of each of some light-emitting elements is reduced, and a view illustrating respective light-emitting patterns of the light-emitting elements.
FIG. 17 is a set including a timing diagram illustrating that gradation control is executed by making the brightness of a central portion and a peripheral portion of the headlamp different, and a view illustrating respective light-emitting patterns of the light-emitting elements.
FIG. 18 is a conceptual diagram for executing, through the headlamp of the vehicle, luminance control that varies depending on whether a road is for vehicles or pedestrians.
FIG. 19 is a set of views illustrating images captured per respective scenarios and beam patterns of the headlamp.
FIG. 20 is a block diagram illustrating the vehicle capable of detecting a distance to an object located ahead according to the present disclosure.
FIG. 21 is a diagram illustrating a lamp control method configured to drive the lamp control unit after images are captured by a front camera, an IR camera, and a TOF camera.

### Mode for the Invention

Embodiments disclosed in the present specification will be described in detail below with reference to the accompanying drawings. The same reference numerals are used for the same or similar constituent elements, regardless of figure numbers, and redundant descriptions thereof are not repeated. The terms "module" and "unit" are hereinafter used interchangeably to name constituent elements solely for the convenience of description in the present specification. These terms are not intended to have different meanings or to indicate different functions. In addition, in describing the embodiments disclosed in the present specification, detailed descriptions of well-known related technologies may be omitted when such descriptions are deemed to obscure the nature and gist of the present disclosure. In addition, the accompanying drawings are merely provided to facilitate understanding of the embodiments disclosed in the present specification and shall not be construed as limiting the technical idea disclosed in the present specification. Furthermore, any modifications, equivalents, or substitutions of constituent elements, to the extent falling within the technical scope of the present disclosure, are intended to be encompassed within the scope of the present disclosure.

The ordinal numbers first, second, and so forth may be used to describe various elements, but they do not limit these elements. These terms are used merely to distinguish among constituent elements having similar functions.

It should be understood that a constituent element, when referred to as "being connected to" or "having access to" a different constituent element, may be directly connected to or have direct access to the different constituent element, or may be indirectly connected to or have access to the different constituent element through one or more intermediate constituent elements. Likewise, it should be understood that, when a constituent element is described as being "connected to" or "having access to" another constituent element, such connection or access may be direct without the need for one or more intermediary constituent elements.

A noun in singular form, unless clearly indicated otherwise by the context, shall be understood to include the plural form.

The terms "include," "have," and equivalent expressions, as used in the present application, shall be understood to indicate the presence of a feature, number, step, operation, constituent element, component, or combination thereof, without precluding the possibility of the presence or addition of one or more other features, numbers, steps, operations, constituent elements, components, or combinations thereof.

As used in the present specification, the term 'vehicle' may conceptually include an automobile or a two-wheeled vehicle. The vehicle will be described below, with particular emphasis on the automobile.

As used in the present specification, the term 'vehicle' may conceptually include a combustion engine vehicle having an engine as a power source, a hybrid vehicle having an engine and an electric motors as power sources, and an electric vehicle with an electric motor as a power source.

In the following description, the left side of the vehicle refers to a left side with respect to the traveling direction of the vehicle, and the right side of the vehicle refers a right side with respect to a traveling direction of the vehicle.

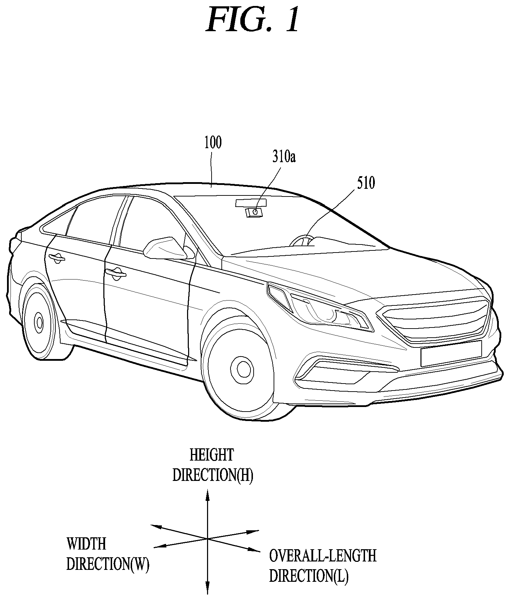

FIG. 1 is a view illustrating the exterior of a vehicle according to an embodiment of the present disclosure.

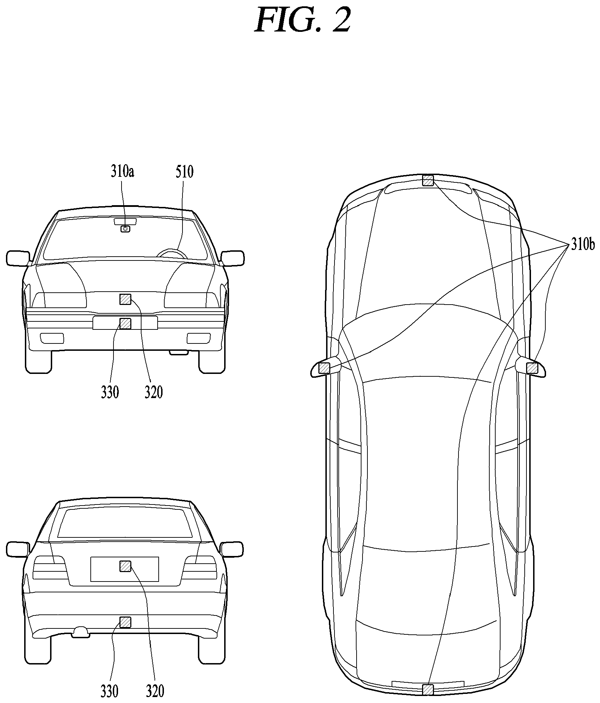

FIG. 2 is a view illustrating the vehicle according to the embodiment of the present disclosure when viewed at various exterior angles.

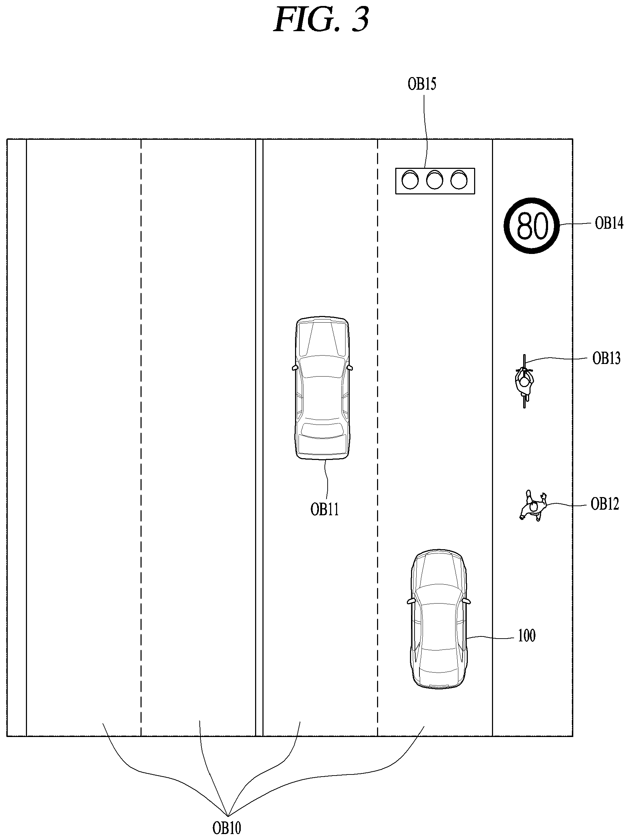

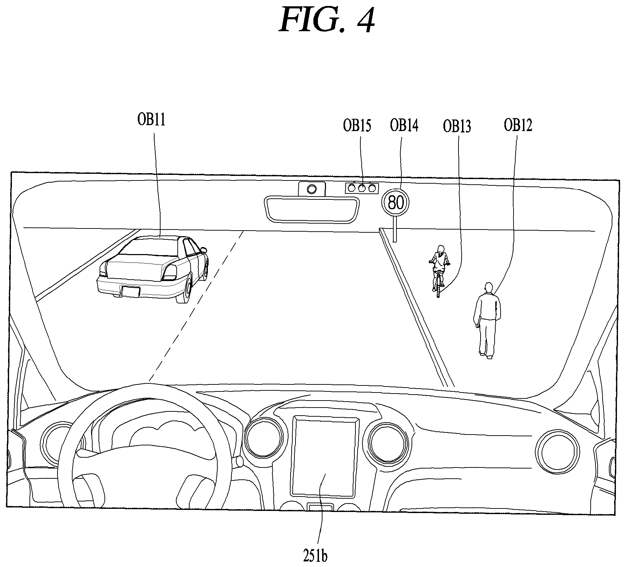

FIGS. 3 and 4 are views each illustrating various objects related to driving the vehicle according to the embodiment of the present disclosure.

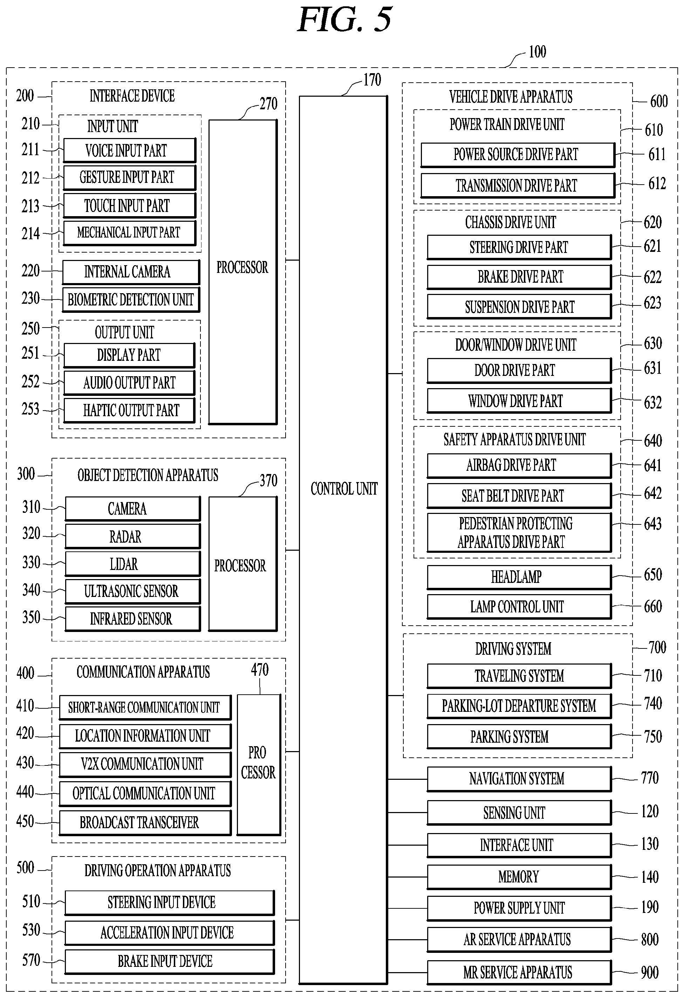

FIG. 5 is a block diagram that is referenced to describe the vehicle according to the embodiment of the present disclosure.

With reference to FIGS. 1 to 5, a vehicle 100 may include wheels that are rotated by a motive power source and a irradiation input device 510 for adjusting the traveling direction of the vehicle 100.

The vehicle 100 may be an autonomous driving vehicle.

The vehicle 100 may switch, in response to a user input, to an autonomous driving mode or a manual mode.

For example, through a user interface device 200, the vehicle 100 may switch from the manual mode to an autonomous driving mode, or may switch from the autonomous driving mode to the manual mode in response to the user input.

The vehicle 100 may switch to the autonomous driving mode or the manual mode on the basis of driving situation information. The driving situation information may be generated on the basis of object information provided by an object detection device 300.

For example, the vehicle 100 may switch from the manual mode to the autonomous driving mode or from the autonomous driving mode to the manual mode on the basis of the driving situation information generated by the object detection device 300.

For example, the vehicle 100 may switch from the manual mode to the autonomous driving mode or from the autonomous driving mode to the manual mode on the basis of the driving situation information received through a communication device 400.

The vehicle 100 may switch from the manual mode to the autonomous driving mode or from the autonomous driving mode to the manual mode on the basis of information, data, or signals, all of which are provided by an external device.

In a case where the vehicle 100, which is an autonomous driving vehicle, may be driven in the autonomous driving mode, the vehicle 100 may be driven through the use of an operational system 700.

For example, the autonomous driving vehicle 100 may be driven on the basis of information, data, or signals, all of which are regenerated by a driving system 710, a parking-lot departure system 740, or a parking system 750.

In a case where the vehicle 100, which is an autonomous driving vehicle, is driven in the manual mode, the vehicle 100 may receive a user input for driving through a driving operation apparatus 500. The vehicle 100 may be driven in response to the user input received through the driving operation apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 5, the vehicle 100 may include the user interface device 200, the object detection device 300, the communication device 400, the driving operation apparatus 500, a vehicle drive apparatus 600, the operational system 700, a navigation system 770, a sensing unit 120, an interface unit 130, a memory 140, a control unit 170, and a power supply unit 190.

According to an embodiment, the vehicle 100 may further include one or more constituent elements in addition to the constituent elements described in the present specification or may omit one or more of the described constituent elements.

The user interface device 200 is a device for communication between the vehicle 100 and the user. The user interface device 200 may receive the user input and may provide information, generated by the vehicle 100, to the user. The vehicle 100 may implement a user interface (UI) or a user experience (UX) through the user interface device 200.

The user interface device 200 may include an input unit 210, an internal camera 220, a biometric detection unit 230, an output unit 250, and a processor 270.

According to an embodiment, the user interface device 200 may further include one or more constituent elements in addition to the constituent elements described in the present specification or may omit one or more of the described constituent elements.

The input unit 200 serves to receive information from the user. Data collected in the input unit 210 may be analyzed by the processor 270 and processed into a user's control command.

The input unit 200 may be arranged within the vehicle 100. For example, the input unit 200 may be arranged on a region of one of the following: a steering wheel, an instrument panel, a seat, each pillar, a door, a center console, a head lining, a sun visor, a windshield, a window, or the like.

The input unit 200 may include a voice input part 211, a gesture input part 212, a touch input part 213, and a mechanical input part 214.

The voice input part 211 may convert a user's voice input into an electrical signal. The electrical signal, resulting from the conversion, may be provided to the processor 270 or the control unit 170. The control unit 170 may control overall operations of each unit within a vehicle 1. The control unit 170 may be referred to as an Electronic Control Unit (ECU). The processor 270 may detect and identify an object within an image. The processor 270 may be referred to as an ADAS determination unit.

The voice input part 211 may include one or more microphones.

The gesture input part 212 may convert a user's gesture input into an electrical signal. The electrical signal, resulting from the conversion, may be provided to the processor 270 or the control unit 170.

The gesture input part 212 may include at least one of the following: an infrared sensor or an image sensor, each of which serves to detect the user's gesture input.

According to an embodiment, the gesture input part 212 may detect the user's 3D gesture input. To this end, the gesture input part 212 may include a plurality of light-emitting units, each emitting an infrared ray, or a plurality of image sensors.

The gesture input part 212 may detect the user's 3D gesture input through a time-of-flight (TOF) method, a structured light method, or a disparity method.

The touch input part 213 may convert the user's touch input into an electrical signal. The electrical signal, resulting from the conversion, may be provided to the processor 270 or the control unit 170.

The touch input part 213 may include a touch sensor for detecting the user's touch input.

According to an embodiment, the touch input unit 213 may be integrally formed with a display part 251 and thus be configured as a touch screen. The touch screen may provide both an input interface and an output interface between the vehicle 100 and the user.

The mechanical input part 214 may include at least one of the following: a button, a dome switch, a jog wheel, or a jog switch. An electrical signal generated by the mechanical input part 214 may be provided to the processor 270 or the control unit 170.

The mechanical input part 214 may be arranged on a steering wheel, a center fascia, a center console, a cockpit, a door, or the like.

The internal camera 220 may acquire an image of the interior of the vehicle 100. The processor 270 may detect the user's state on the basis of the image of the interior of the vehicle 100. The processor 270 may acquire the user's gaze information from the image of the interior of the vehicle 100. The processor 270 may detect the user's gesture from the image of the interior of the vehicle 100.

The biometric detection unit 230 may acquire the user's biometric information. The biometric detection unit 230 may include a sensor for acquiring the user's biometric information and may acquire the user's fingerprint information, heart rate information, and equivalents thereof using the sensor. The biometric information may be used for user authentication.

The output unit 250 may generate outputs associated with a visual sense, an auditory sense, a haptic sense, and the like.

The output unit 250 may include at least one of the following: the display part 251, an audio output part 252, and a haptic output part 253.

The display part 251 may display graphic objects that correspond to various pieces of information.

The display module 251 may include at least one of the following: a liquid crystal display (LCD), a thin-film transistor-LCD (TFT LCD), an organic light-emitting diode (OLED), a flexible display, a three-dimensional (3D) display, or an e-ink display.

The display part 251 may be configured to have a layered structure or an integrated structure with the touch input part 213, thereby forming a touch screen.

The display part 251 may be configured as a head-up display (HUD), a center information display (CID), a cluster, and/or a rear seat entertainment (RSE). In a case where the display part 251 is configured as the HUD, the display part 251 may include a projection module, thereby outputting information through an image projected onto the window shield or the window.

The display part 251 may be a transparent display. The transparent display be attached to the window shield or the window.

The transparent display has a predetermined level of transparency and may display a predetermined screen. The transparent display may include at least one of the following: a thin-film electroluminescent (TFEL), a transparent organic light-emitting diode (OLED), a transparent liquid crystal display (LCD), a transmissive transparent display, or a transparent light-emitting diode (LED) display. The transparent display may have adjustable transparency.

The audio output part 252 converts an electrical signal, provided from the processor 270 or the control unit 170, into an audio signal and outputs the audio signal. To this end, the audio output part 252 may include at least one speaker.

The haptic output part 253 generates a tactile output. For example, the haptic output part 253 may operate to vibrate a steering wheel, a safety belt, and seats 110FL, 110FR, 110RL, and 110RR, thereby enabling the user to perceive a vibration output.

The processor 270 may control overall operations of each unit of the user interface device 200.

According to an embodiment, the user interface device 200 may include a plurality of processors 270 or may be configured without the processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display device.

The user interface device 200 may operate under the control of the control unit 170.

The object detection device 300 is a device for detecting an object located outside the vehicle 100. This object may be an external entity associated with driving the vehicle 100. With reference to FIGS. 3 and 4, examples of an object O may include a lane OB10, a different vehicle OB11, a pedestrian OB12, a two-wheeled vehicle OB13, a traffic sign OB14, a traffic light OB15, ambient light, a road, a structure, a speed bump, a road feature, an animal, and the like.

The lane OB10 may be a driving lane, a lane adjacent to the driving lane, or a lane along which a different vehicle in the opposite direction travels. The lane OB10 may be conceptually represented as including the left and right boundary lines that form the lane.

The different vehicle OB11 may be a vehicle that travels in the vicinity of the vehicle 100. The different vehicle OB11 may be a vehicle located within a predetermined distance from the vehicle 100. For example, the different vehicle OB11 may be a vehicle that travels ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may be a person-carrying vehicle that is located in the vicinity of the vehicle 100 and moves on two wheels. The two-wheeled vehicle OB12 may be a person-carrying vehicle that is located within a predetermined distance from the vehicle 100 and has two wheels. For example, the two-wheeled vehicle OB13 may be a motorcycle or a bicycle that is located on a sidewalk or roadway.

Examples of the traffic signal may include the traffic sign OB14, the traffic light OB15, or a pattern or text drawn on a road surface.

The light may be light generated from a lamp provided on a different vehicle. The light may be light generated from a streetlamp. The light may be solar light.

The road may include a road surface, a curved section, an upward slope, a downward slope, and the like.

The structure may be an object that is located in the vicinity of a road and fixed to the ground. Examples of the structure may include a streetlamp, a roadside tree, a building, an electric pole, a traffic light, a bridge, and the like.

Examples of the road feature may include a mountain, a hill, and the like.

The objects may be classified into movable objects and stationary objects. Examples of the movable objects may be conceptually represented as including a different vehicle and a pedestrian. Examples of the stationary objects may be conceptually represented as including a traffic light, a road, and a structure.

The object detection apparatus 300 may include a camera 310, a radar 320, a LiDAR 330, an ultrasonic sensor 340, an infrared sensor 350, and a processor 370.

According to an embodiment, the object detection device 300 may further include one or more constituent elements in addition to the constituent elements described in the present specification or may omit one or more of the described constituent elements.

The camera 310 may be located at an appropriate portion of the exterior of the vehicle to capture an image of the surroundings of the vehicle 100. The camera 310 may be a mono camera, a stereo camera 310a, an around view monitoring (AVM) camera 310b, or a 360-degree camera.

For example, the camera 310 may be arranged adjacent to a front windshield within the vehicle to acquire an image of the surroundings in front of the vehicle. Alternatively, the camera 310 may be arranged in the vicinity of the front bumper or the radiator grill.

For example, the camera 310 may be arranged adjacent to a rear glass pane within the vehicle to capture the image of the surroundings behind the vehicle. Alternatively, the camera 310 may be arranged adjacent to a rear bumper, a trunk, or a tailgate.

For example, the camera 310 may be arranged adjacent to at least one of the side windows within the vehicle to capture an image of the surroundings alongside the vehicle. Alternatively, the camera 310 may be arranged in the vicinity of a side mirror, a fender, or a door. The camera 310 may provide the captured image to the processor 370.

The communication device 400 is a device for performing communication with an external device. The external device here may be a different vehicle, a mobile terminal, or a server.

The optical communication unit 440 is a unit for performing communication with the external device through the use of light. The optical communication unit 440 may include an optical transmission part for converting an electrical signal into an optical signal and transmitting the optical signal to the outside, and an optical reception part for converting a received optical signal into an electrical signal. According to an embodiment, the optical transmission part may be formed integrally with a lamp included in the vehicle 100.

The vehicle drive apparatus 600 is an apparatus that electrically controls the operation of various apparatuses within the vehicle 100. The vehicle drive apparatus 600 may include a power train drive unit 610, a chassis drive unit 620, a door/window drive unit 630, a safety apparatus drive unit 640, a headlamp 650, and a lamp control unit 660. The lamp control unit 660 may perform electronic control of various lamp apparatuses within the vehicle 100. According to an embodiment, the vehicle drive apparatus 600 may include one or more constituent elements in addition to constituent elements in the present specification or may omit one or more of the described constituent elements. The vehicle drive apparatus 600 may include a processor. Units of the vehicle drive apparatus 600 may include respective processors for individual operation.

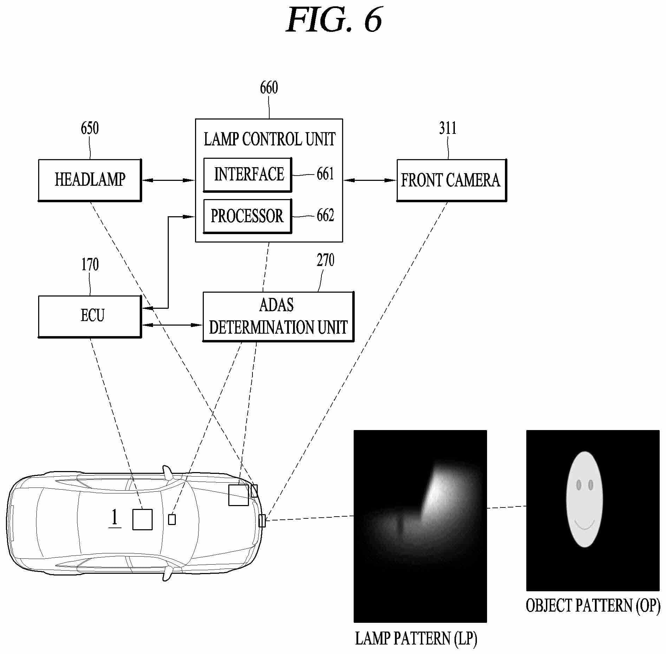

A vehicle that performs lamp control for improving object recognition according to the present disclosure will be described below. In this regard, FIG. 6 is a block diagram illustrating the vehicle that performs lamp control for improving object recognition according to the present disclosure. With reference to FIG. 6, the vehicle 1 acquires an object image including an object pattern OP by capturing an image of an object located ahead through a front camera 311. The vehicle 1 controls the head lamp 650 through the lamp control unit 660, thereby forming a lamp pattern LP.

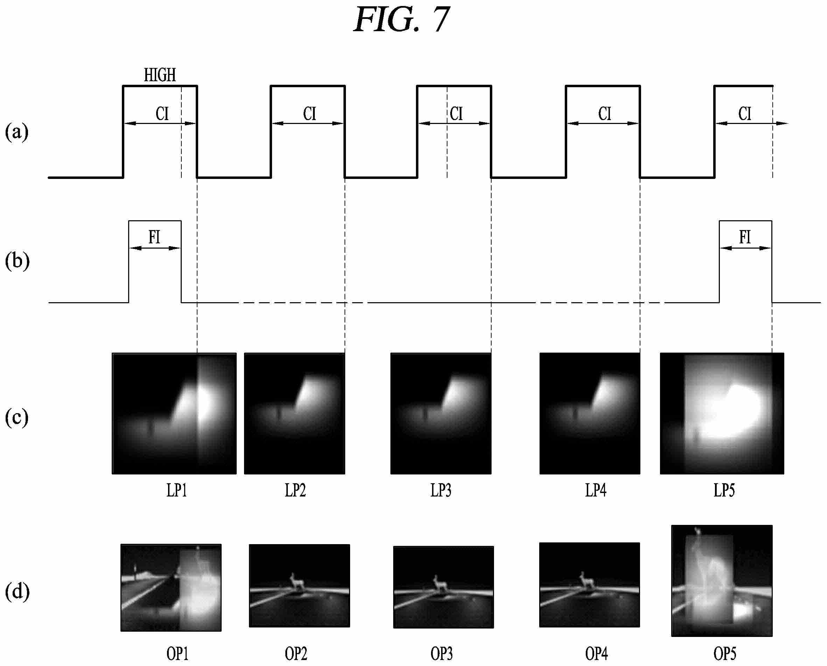

FIG. 7 is a set including a timing diagram illustrating a light-emitting pattern of the lamp control unit according to the present disclosure and illustrating a shutter-opening timing for the front camera, and a view illustrating a lamp pattern and an object pattern at each point in time during shutter opening. With reference to FIG. 6 and (a) of FIG. 7, the light-emitting pattern of the headlamp 650 may be formed by the lamp control unit 660 using a pulse width modulation (PWM) scheme. When a pulse-width modulation value is high, the headlamp 650 is in an off state. When the pulse-width modulation value is low, the headlamp 650 is in an on state.

In relation to object contrast according to the light-emitting pattern of the headlamp 650, a luminance difference may be defined as shown in Mathematical Equation 1. [Mathematical Equation 1] $Δ {L}_{th} = k ⋅ {\left(\frac{\sqrt{ϕ}}{α}+\sqrt{L}\right)}^{2} ⋅ \frac{a \left(α, {L}_{u}\right) + t}{t} ⋅ {F}_{cp} ⋅ AF$

In Mathematical Equation 1, ΔLₜₕ is defined as an object contrast that enables the human eye to recognize an object. As the absolute value of ΔLₜₕ increases, object recognition may be regarded as increasing proportionally. When ΔLₜₕ is smaller than 0, the object contrast may be regarded as a negative contrast. When ΔLₜₕ is greater than 0, the object contrast may be regarded as a positive contrast. The ratio ΔL_{actual}/ΔLₜₕ is defined as a visibility level VL. ΔL_{actual} is defined as Lₜ- L_{b}, where Lₜ is a target contrast (target luminance), and L_{b} is a background contrast (background luminance).

In Mathematical Equation 1, k denotes a detection probability factor, α denotes a target size, t denotes an observation time, FCP denotes a contrast polarity factor, and AF denotes an age factor. $\sqrt{ϕ} , √ L$ represents a luminous flux function and a luminance function, and a(α, Lu) represents a Blondel-Rey constant.

Theoretically, under nighttime road conditions, obstacle detection becomes possible when VL is equal to 1. However, various driving tasks are required of drivers who actually drive under nighttime road conditions. Accordingly, a VL threshold value at which obstacle detection becomes possible must always be set to be greater than a value derived from laboratory-based experimental results. A field factor, expressed as a ratio between VLs required under laboratory conditions and under actual nighttime road conditions, has a value within a range of approximately 1 to 20.

To adjust the brightness of the headlamp 650, luminance control may be executed between a plurality of frames in such a manner as to form an optimal luminance difference for recognizing surroundings and recognizing objects that include a vehicle and a pedestrian located ahead. A method of forming the optimal luminance difference may be performed not only by conducting experimental measurements, but also by using data on road conditions.

The light-emitting pattern of the headlamp 650 may be formed by the lamp control unit 660 in such a manner that on and off intervals are alternately repeated. A waveform of the headlamp 650 may have on and off intervals that are alternately repeated at a frequency of 120 Hz. The headlamp 650 may have a brightness control interval CI formed in such a manner that the headlamp 650 is turned off or has a reduced brightness.

With reference to FIGS. 6 and (b) of FIG. 7, open and closed intervals of a shutter of the front camera 311 may be alternatively formed. The shutter of the front camera 311 may be open, thereby forming a frame interval FI during which an image of an object is captured. The frame interval FI during which the shutter of the front camera 311 is opened may be set to 30 fps. The waveform of the headlamp 650 is repeated at a frequency of 120 Hz. Accordingly, a first period of the frame interval FI is formed to be four times longer than a second period of the brightness control interval CI of the headlamp 650. Therefore, even during an interval during which the shutter of the front camera 311 is off, the brightness control interval CI of the headlamp 650 may be repeated three additional times.

During the frame interval FI of the front camera 311, a point in time for the brightness control interval CI may be formed in such a manner that the headlamp 650 is turned off or has a reduced brightness before an object, such as a vehicle located ahead, is recognized. An ending point of the brightness control interval CI may be formed in such a manner that an object is recognized up to the ending point of the frame interval FI of the front camera 311. In this regard, according to the present disclosure, timing for a shutter of a camera, such as the front camera 311, and timing for a specific frame of the headlamp 650 may be set to be the same, or the timing for the specific frame may be set to be advanced by a predetermined time.

With reference to FIG. 6 and (c) of FIG. 7, the headlamp 650 may be configured as an LED lamp. Therefore, a lamp pattern generated by the headlamp 650 may be referred to as an LED lamp pattern. First and fifth lamp patterns LP1 and LP5 during an interval during which the shutter of the front camera 311 is opened are formed to be brighter than second, third, and fourth lamp patterns LP2, LP3, and LP4 during an interval in which the shutter of the front camera 311 is closed. FIG. 6 and (d) of FIG. 7 illustrate a change in object contrast that varies with a change in the brightness of the headlamp 650.

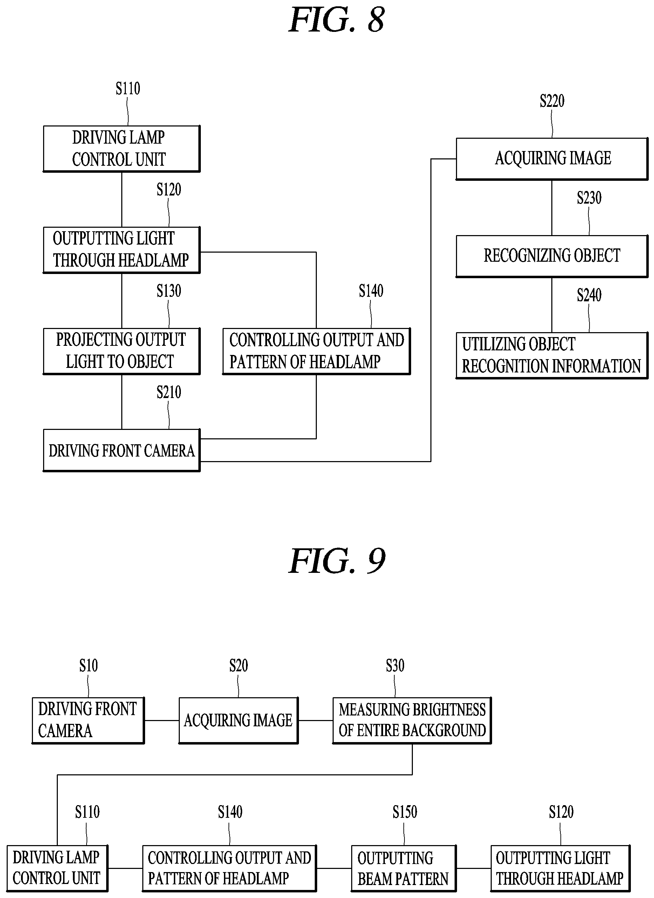

A lamp control method for improving object recognition of the vehicle according to the present disclosure will be described. In this regard, FIG. 8 is a flowchart illustrating the lamp control method for improving object recognition of the vehicle according to the present disclosure.

With reference to FIGS. 6 to 8, the lamp control method may include a first driving step S110 of driving the lamp control unit, an output/pattern control step S140 of controlling an output and a pattern of the headlamp, and a second driving step S210 of driving the front camera. In the output/pattern control step S140, the output and the pattern of the headlamp 650 may be controlled depending on conditions, such as surrounding circumstances and locations of objects, in such a manner that only a frame for acquiring a camera image is controlled while an existing pattern is maintained.

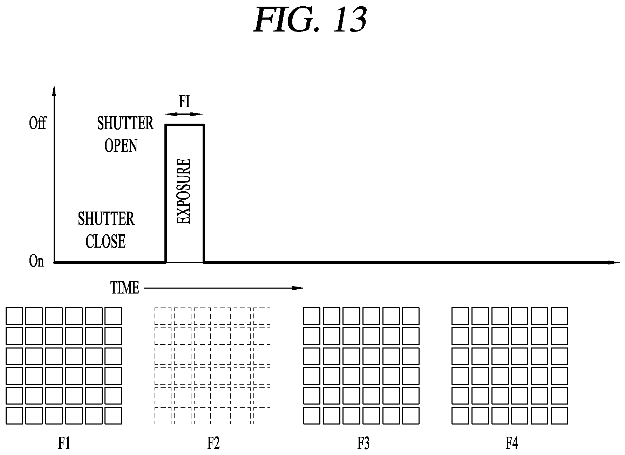

The lamp control method may further include an output step S120 of outputting light through the headlamp and a projection step S130 of projecting the output light onto an object. In the projection step S130, depending on the application, brightness control of the headlamp may be performed, and a pattern thereof may be formed, as illustrated in FIGS. 13 to 17. The lamp control method may further include an image acquisition step S220 of acquiring an image through the front camera. In the image acquisition step S220, an image for object recognition may be acquired through a specific light-emitting pattern of the headlamp.

In the second driving step S210 of driving the front camera, the output/pattern control step S140 may be repeatedly performed before the image acquisition step S220 is performed after the shutter is opened.

The turning on/off of the headlamp 650, the brightness control, and the light-emitting pattern control are possible through the output/pattern control step S140. With respect to the light-emitting pattern control, gradation pattern control, checkered pattern control, oblique-line pattern control, and the like are possible.

The lamp control method may further include an object recognition step S230 of recognizing an object within an image and a recognized information utilization step S240 of utilizing object recognition information. In the object recognition step S230, You Only Look Once v8 (YOLO v8) may be used as an object recognition algorithm, without being limited thereto. The object recognition algorithm may vary depending on the application. A YOLO model is a deep learning-based object recognition algorithm that estimates the type and the location of an object using a 1-stage detector method in which an image is viewed only once. Therefore, in the object recognition method according to the present specification, AI learning may be used for object recognition of acquired images in order to find an optimal value for object recognition.

Respective brightness states of a vehicular road and a pedestrian road may be determined using a small target visibility model, thereby quantifying the accuracy level of object recognition that varies with the brightness states. In addition, not only may the accuracy level of recognition of a vehicle and a pedestrian located ahead be improved according to respective brightness states of the vehicular road and the pedestrian road, but driving control and driving performance evaluation of the vehicle may also be performed.

The YOLO model uses a single neural network architecture, thereby making the configuration thereof simple and the processing speed thereof high.

The YOLO model also learns surrounding contextual information, thereby processing an entire image and having a low background error rate. When the YOLO model receives an input file, a single convolution network simultaneously computes a class probability of a bounding box. The computation is performed using variations of x, y, w, and h, which constitute location information of a bounding box of an object to be found within an image. In the recognized information utilization step S240, information acquired through object recognition may be used for display on a vehicle information display window or for control and the like of various mechanical apparatuses and electronic devices of the vehicle that uses the information.

The lamp control method according to the present disclosure may be configured to drive the lamp control unit 660 after the front camera 311 captures an image. In this regard, FIG. 9 is a diagram illustrating the lamp control method configured to drive the lamp control unit after the front camera according to the present disclosure captures an image.

With reference to FIGS. 6 to 9, the lamp control method may include a driving step S10 of driving the front camera, a brightness measurement step S30 of measuring the brightness of an entire background, and an output/pattern control step S140 of controlling the output and the pattern of the headlamp.

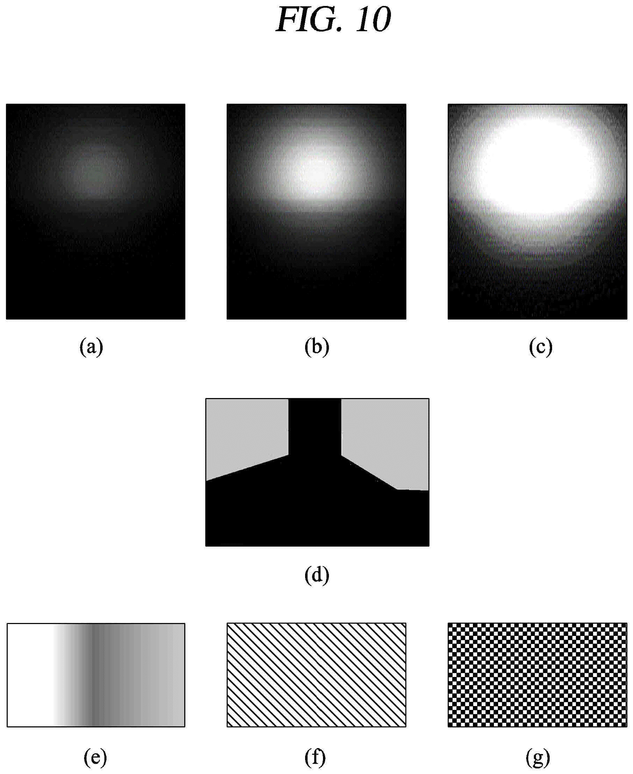

In the driving step S10 of driving the front camera, an image acquisition step S20 may be performed after the shutter is opened, and the brightness measurement step S30 of measuring the brightness of the entire background from the acquired image. In this regard, FIG. 10 is a set of views illustrating patterns associated with the brightness control and the pattern control according to embodiments.

(a) to (c) of FIG. 10 illustrate the results of executing the brightness control by controlling the output of the headlamp. With reference to (a) to (c) of FIG. 10, the brightness control may be executed in such a manner as to increase the brightness of a specific region. In this regard, the brightness control of the specific region may be executed through a simple brightness adjustment pattern. In addition, the brightness adjustment pattern is formed based on the amount of light of the surrounding background, thereby executing the brightness control of the specific region.

(d) of FIG. 10 illustrates that a vehicular road portion and a pedestrian road portion of the acquired image are formed to have different brightness levels. In this regard, the vehicular road portion has a large amount of light from street lamps and vehicle lamps, so that a dark light-emitting pattern may be formed without turning on the headlamp. In contrast, in the pedestrian road portion, preparatory measures are provided for an unexpected event involving a pedestrian and an animal by emitting light.

(e) of FIG. 10 illustrates a gradation pattern for recognizing an object in the central region of the vehicular road portion. Oblique-line patterns and checkered patterns in (f) of FIG. 10 and (g) of FIG. 10 may be used as template data for object recognition. The oblique-line pattern in (f) of FIG. 10 is a template pattern for recognizing a vehicle moving in a specific direction, such as an oblique-line direction. For example, vehicles traveling on the vehicular road formed in the specific direction may be recognized. In this regard, on a left-turn road formed in the specific direction, vehicles that make a left turn or a right turn at an intersection may be recognized. The checkered pattern in (g) of FIG. 10 is a template pattern for recognizing an object within a specific region, the object having a size less than or equal to a predetermined size. For example, to recognize a vehicle registration number in black on a white-background license plate of a vehicle located ahead, a checkered pattern has a size corresponding to the size of the vehicle registration number, thereby enabling recognition of the license plate of the vehicle located ahead. In addition, either a specific portion of a person or an object may be recognized through a checkered pattern having a size corresponding to the size of either the specific portion of the person or the object on the pedestrian road ahead of the vehicle, the size being less than or equal to a predetermined size.

With reference to FIGS. 6 to 10, the lamp control method may further include an image acquisition step S20 of acquiring an image through the front camera and a first driving step S110 of driving the lamp control unit. The lamp control method may further include a beam pattern output step S150 of outputting a beam pattern of the headlamp and the output step S120 of outputting light through the headlamp.

The lamp control method may include a first driving step S110 of driving the lamp control unit, an output/pattern control step S140 of controlling the output and the pattern of the headlamp, and a second driving step S210 of driving the front camera. In the output/pattern control step S140, the output and the pattern of the headlamp 650 may be controlled depending on conditions, such as surrounding circumstances and locations of objects, in such a manner that only a frame for acquiring a camera image is controlled while an existing pattern is maintained.

In the output/pattern control step S140, output control may be executed in such a manner that the vehicular road portion and the pedestrian road portion in (d) of FIG. 10 are output to have different brightness levels. In the output/pattern control step S140, the gradation pattern in (e) of FIG. 10 may be used to recognize an object in the central region of the vehicular road portion. In the output/pattern control step S140, the oblique-line pattern in (f) of FIG. 10 may be used to recognize vehicles that travel along the vehicular road formed in a specific direction or to recognize vehicles that make a right turn on a left-turn road formed in a specific direction or make a right turn at an intersection. In the output/pattern control step S140, a checkered pattern having a size corresponding to the size of a vehicle registration number may be used to recognize the vehicle registration number in black on the white-background license plate of a vehicle located ahead. In the output/pattern control step S140, a checkered pattern having a corresponding size to recognize either a specific portion of a person or an object on the pedestrian road ahead of the vehicle, the size being less than or equal to a predetermined size, may be used.

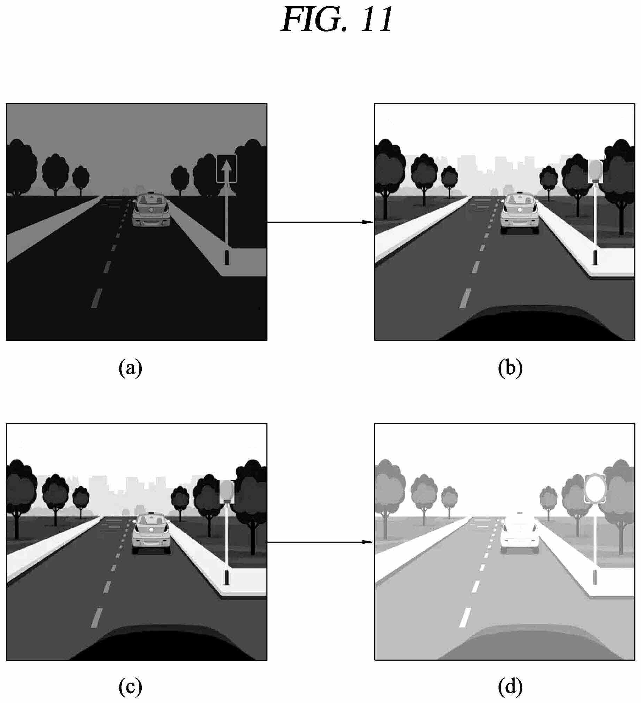

According to embodiments, FIG. 11 is a set of comparison views illustrating images that are captured based on the presence or absence of streetlamp light and changes in the brightness of the headlamp according to embodiments. (a) of FIG. 11 illustrates a first image acquired when the headlamp is in the off state in a case where no streetlamp light is present. (b) of FIG. 11 illustrates a second image acquired when the headlamp is in an on state in a case where streetlamp light is present. (c) of FIG. 11 illustrates the first image acquired when the headlamp is in the off state in the case where streetlamp light is present. (d) of FIG. 11 illustrates the second image acquired when the headlamp is in the on state in the case where streetlamp light is present.

With reference to (a) and (b) of FIG. 11, image contrast is improved when the headlamp is in the off state in the case where no streetlamp light is present. With reference to (c) and (d) of FIG. 11, the image contrast is improved when the headlamp is in the on state in the case where streetlamp light is present.

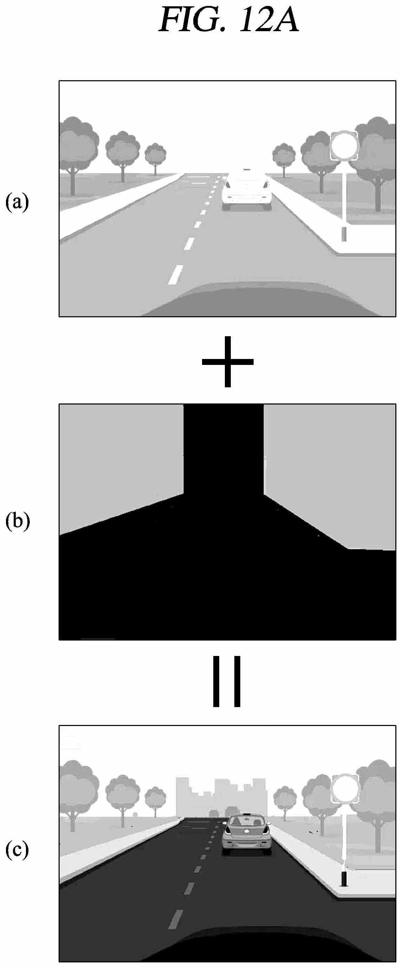

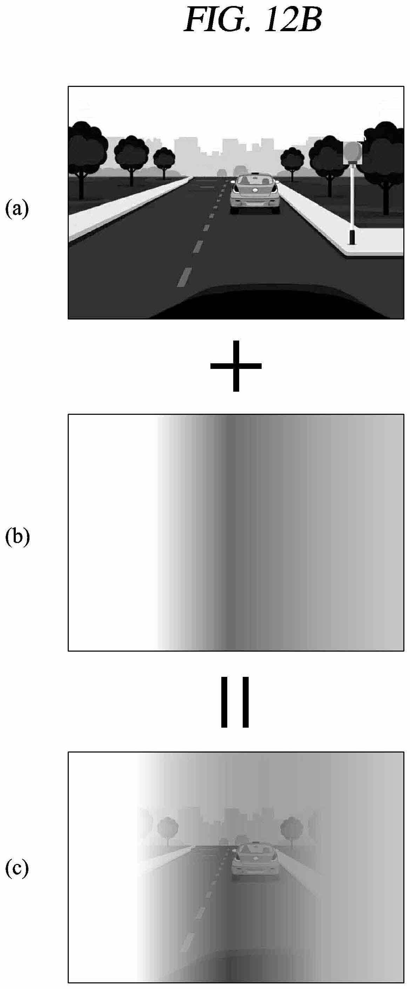

FIGS. 12A and 12B are two sets of views, each set including views illustrating an embodiment in which an object recognition region is set within an image including the vehicular road and the background. With reference to (d) of FIG. 11 and (a) of FIG. 12A, a background image is acquired when the headlamp is in the on state in the case where streetlamp light is present. With reference to (b) of FIG. 12A, the beam pattern of the headlamp is formed in such a manner that the headlamp is in the off state only for the vehicular road portion. With reference to (a) to (c) of FIG. 12A, a final image acquired by a final lamp pattern is illustrated. The final lamp pattern results from compositing a beam pattern, in which the headlamp is in the off state only for the vehicular road portion, with the background image when the headlamp is in the on state. Therefore, object recognition performance for an object, such as a vehicle located ahead in the vehicular road portion, rather than in the pedestrian road portion, may be improved.

With reference to (b) and (c) of FIG. 11, and (a) of FIG. 12B, an object, such as a vehicle located ahead in the vehicular road portion, and the background image are acquired. With reference to (b) of FIG. 12B, the beam pattern of the headlamp is formed in such a manner that gradation is applied to a vehicle portion located ahead. With reference to (a) to (c) of FIG. 12B, a final image acquired by a final lamp pattern is illustrated. The final lamp pattern results from compositing a beam pattern of the headlamp, in which gradation is applied only to the vehicle portion located ahead, with an object, such as a vehicle located ahead in the vehicular road portion, and the background image. Accordingly, object recognition performance may be further improved in a region of the vehicular road portion where a vehicle is located ahead.

FIG. 13 is a timing diagram associated with the lamp control unit and on/off operation of the front camera in FIG. 6. With reference to FIG. 13, the headlamp 650 may be controlled to have respective light-emitting patterns corresponding to a first frame F1 to a fourth frame F4. For object detection and object recognition, an image may be acquired only with respect to the second frame F2 among frames from the first frame F1 to the fourth frame F4. In this regard, to adjust the brightness of the headlamp 650, luminance control may be executed between a plurality of frames in such a manner as to form an optimal luminance difference for object recognition. A method of forming the optimal luminance difference may be performed not only by conducting experimental measurements, but also using data on road conditions.

With reference to FIGS. 6 to 13, a plurality of light-emitting elements of the headlamp 650 may be turned off during a frame interval FI during which an image of an object is captured by the front camera 311. In the second frame F2 associated with the timing at which the shutter of the front camera 311 is opened, the plurality of light-emitting elements of the headlamp 650 may be controlled to be turned off. The headlamp 650 may include a plurality of light-emitting elements arranged adjacent to each other along a horizontal axis direction and a perpendicular axis direction. The plurality of light-emitting elements of the headlamp 650 is illustrated as 6 × 6 LEDs, but is not limited thereto. The configuration of the plurality of light-emitting elements may be changed depending on the application.

A first frame F1 of a brightness control interval CI may be formed in such a manner that the plurality of light-emitting elements are all in the on state during a first interval preceding the frame interval FI. A second frame F2 of the brightness control interval CI may be formed in such a manner that the plurality of light-emitting elements are all in the off state during the frame interval FI. A third frame F3 of the brightness control interval CI may be formed in such a manner that the plurality of light-emitting elements are all in the on state during a second interval following the frame interval FI. A fourth frame F4 of the brightness control interval CI may be formed in such a manner that the plurality of light-emitting elements are all in the on state during a third interval following the second interval. Therefore, the plurality of light-emitting elements of the headlamp 650 are turned off during the frame interval FI during which the shutter of the front camera 311 is opened, thereby enabling recognition of an object, such as a vehicle located ahead, on the vehicular road portion.

Brightness control of the plurality of light-emitting elements of the headlamp 650 for recognizing an object, such as a vehicle located ahead, is not limited to a shutter period and a shutter operation timing for the front camera 311. In this regard, in addition to the shutter of a camera, such as the front camera 311, a depth sensor and/or an optical sensing device may be used. Accordingly, object recognition may be performed through the brightness control of the plurality of light-emitting elements of the headlamp 650 that operates in conjunction with an operation cycle and an operation timing for the depth sensor and/or the optical sensing device.

With reference to FIGS. 6 to 13, the lamp control unit 660, which performs lamp control for improving object recognition according to the present disclosure, and the vehicle 1 including the lamp control unit 660, will be described. In this regard, the vehicle 1 may be configured to include the front camera 311, the headlamp 650, and the lamp control unit 660. The front camera 110 may be configured to capture an image of an object in front of the vehicle. The headlamp 650 may be arranged adjacent to the front camera 110. The headlamp 650 may include the plurality of light-emitting elements arranged adjacent to each other along the horizontal axis direction and the perpendicular axis direction.

The lamp control unit 660 may be configured to control the headlamp 650. The lamp control unit 660 may be operatively coupled to an electronic control unit (ECU) 170 and an ADAS determination unit 270. The lamp control unit 660 may be configured to include an interface 661 and a processor 662. The Interface 661 may be operatively coupled to the electronic control unit (ECU) 170 of the vehicle 1. The processor 662 may be configured to receive control information of the head lamp 650 from the ECU 170 through the interface 661.

The processor 662 may control the ADAS determination unit 270 in such a manner that, based on an image of an object that is acquired from the front camera 311, the ADAS determination unit 270 determines the object within the image. The processor 662 may receive, from the ECU 170, the control information of the headlamp 650 for irradiation toward an object. The processor 662 may turn off the headlamp 650 or may reduce the brightness thereof on the basis of the control information of the headlamp 650 in such a manner as to correspond to a frame in which the front camera 311 captures the image of the object.

ADAS determination information on the object determined by the ADAS determination unit 270 may be transmitted to the ECU 170 of the vehicle. The control information of the headlamp 650, generated by the ECU 170 according to the ADAS determination information, may be transmitted to the headlamp control unit 660. The processor 662 may control the headlamp 650 on the basis of the control information of the headlamp 650 in such a manner that during the frame, the headlamp 650 is turned off or has a reduced brightness.

The processor 662 may set the brightness control interval CI of the headlamp 650 in such a manner that the headlamp 650 is turned off during the frame interval FI during which the image of the object is captured by the front camera 311. Alternatively, the processor 662 may set the brightness control interval CI of the headlamp 650 in such a manner that the brightness of the headlamp 650 is reduced during the frame interval FI during which the image of the object is captured by the front camera 311.

Timing for the brightness control interval CI may be set to be earlier than timing for the frame interval FI. The ending point of the brightness control interval CI may be set to be later than the ending point of the frame interval FI. Accordingly, the frame interval FI during which an image of an object is captured by the front camera 311, may be included within the brightness control interval CI of the headlamp 650.

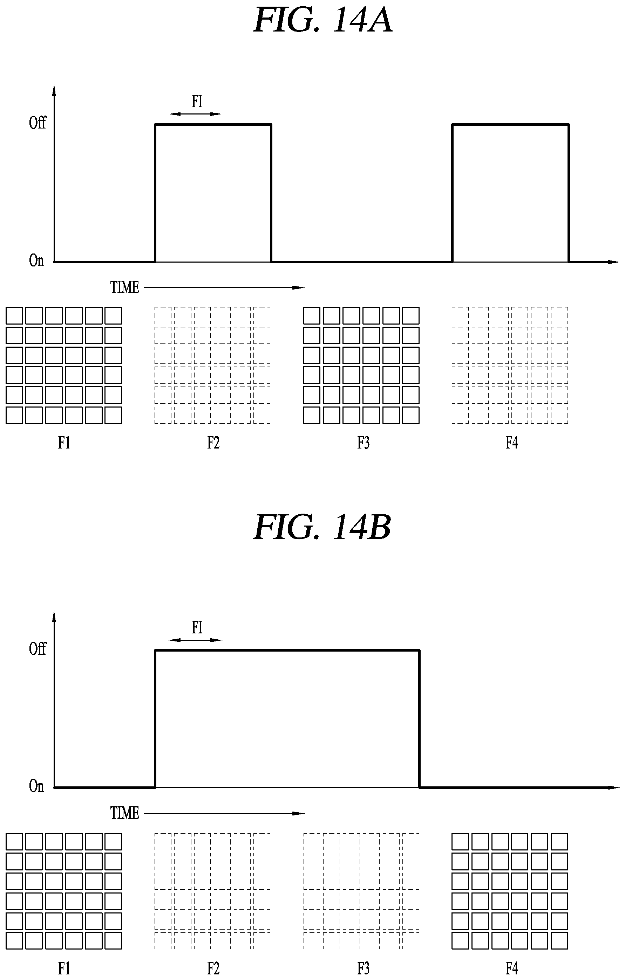

In the vehicle 1 that performs lamp control for improving object recognition according to the present disclosure, the brightness control interval of the lamp may be dynamically controlled, taking into consideration the shutter period. In the vehicle 1, the brightness control interval of the lamp may be set using a discontinuous-frame control scheme. In this regard, FIG. 14A is a set including a timing diagram illustrating that the brightness control interval of the lamp is set using the discontinuous-frame control scheme, and a view illustrating respective light-emitting patterns of the light-emitting elements.

With reference to FIGS. 6 to 12B and FIG. 14A, the processor 662 of the lamp control unit 660 may control the first frame F1 of the brightness control interval CI in such a manner that the plurality of light-emitting elements are all in the on state during the first interval preceding the frame interval FI. The processor 662 may control the second frame F2) of the brightness control interval CI in such a manner that the plurality of light-emitting elements are all turned off during the frame interval FI. The processor 662 may control the third frame F3 of the brightness control interval CI in such a manner that the plurality of light-emitting elements are all in the on state during the second interval following the frame interval FI. The processor 662 may control the fourth frame F4 of the brightness control interval CI in such a manner that the plurality of light-emitting elements are all in the off state during the third interval following the second interval. Accordingly, the plurality of light-emitting elements are repeatedly set alternately to an ON state and an OFF state on a section-by-section basis, thereby enabling detection of an object, such as a vehicle located ahead, in a shorter period.

In the vehicle 1 that performs lamp control for improving object recognition according to the present disclosure, lamp control may be performed using a continuous-frame control scheme. In this regard, FIG. 14B is a set including a timing diagram illustrating that the brightness control interval of the lamp is set using the continuous-frame control scheme, and a view illustrating respective light-emitting patterns of the light-emitting elements. With reference to FIGS. 6 to 12B and FIG. 14B, the processor 662 of the lamp control unit 660 may form continuous frames of the brightness control interval CI in such a manner that the plurality of light-emitting elements are all turned off during a plurality of intervals that include the frame interval FI.

Specifically, the processor 662 may control the first frame F1 of the brightness control interval CI in such a manner that the plurality of light-emitting elements are all in the on state during the first interval preceding the frame interval FI. The processor 662 may control the second frame F2 of the brightness control interval CI in such a manner that the plurality of light-emitting elements are all turned off during the frame interval FI. The processor 662 may control the third frame F3 of the brightness control interval CI in such a manner that the plurality of light-emitting elements are all in the off state during the second interval following the frame interval FI. The processor 662 may control the fourth frame F4 of the brightness control interval CI in such a manner that the plurality of light-emitting elements are all in the on state during the third interval following the second interval. In continuous frames including the second frame F2 and the third frame F3, the plurality of light-emitting elements may remain in the off state. Accordingly, a detection period of an object, such as a vehicle located ahead, may increase. However, sensitivity to a timing error caused by an image acquisition time delay and the like may be reduced.

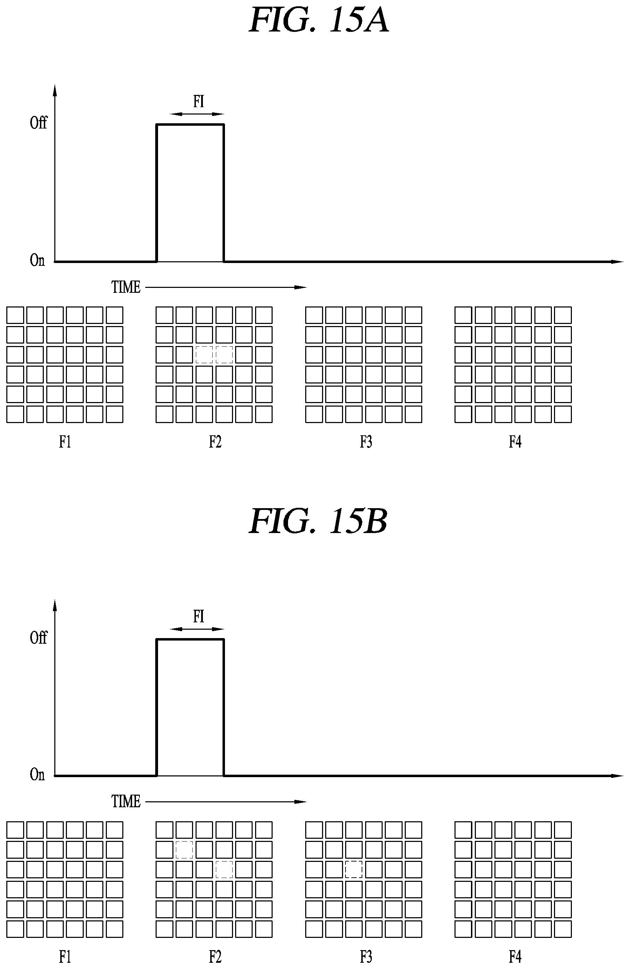

In the vehicle 1 that performs lamp control for improving object recognition according to the present disclosure, only some adjacent light-emitting elements may be controlled to be turned off. In this regard, FIG. 15A is a set including a timing diagram illustrating that only some adjacent light-emitting elements are turned off, and a view illustrating respective light-emitting patterns of the light-emitting elements.

With reference to FIGS. 6 to 12B and FIG. 15A, the processor 662 of the lamp control unit 660 may control the first frame F1 of the brightness control interval CI in such a manner that the plurality of light-emitting elements are all in the on state during the first interval preceding the frame interval FI. Subsequently, the processor 662 may control the second frame F2 of the brightness control interval CI in such a manner that adjacent light-emitting elements, among the plurality of light-emitting elements, are turned off during the frame interval FI. The processor 662 may control the third frame F3 of the brightness control interval CI in such a manner that the plurality of light-emitting elements are all in the on state during the second interval following the frame interval FI.

Accordingly, only adjacent light-emitting elements, among the plurality of light-emitting elements, may be turned off or may have a reduced brightness, thereby enabling selective adjustment of brightness only with respect to a region in which a specific sub-object of an object, such as a vehicle located ahead, is arranged. Therefore, the vehicle 1 may more efficiently recognize only a specific sub-object at a specific location of an object, such as a vehicle located ahead, thereby improving the recognition rate of the specific sub-object.

In the vehicle 1 that performs lamp control for improving object recognition according to the present disclosure, light-emitting elements that are not adjacent to each other and are spaced apart may be controlled to be turned off. In this regard, FIG. 15B is a set including a timing diagram illustrating that only some spaced-apart light-emitting elements are turned off, and a view illustrating respective light-emitting patterns of the light-emitting elements.

With reference to FIGS. 6 to 12B and FIG. 15B, the processor 662 of the lamp control unit 660 may control the first frame F1 of the brightness control interval CI in such a manner that the plurality of light-emitting elements are all in the on state during the first interval preceding the frame interval FI. Subsequently, the processor 662 may control the second frame F2 of the brightness control interval CI in such a manner that light-emitting elements that are not adjacent to each other, among the plurality of light-emitting elements, are turned off during the frame interval FI. In this regard, the second frame F2 may be controlled in such a manner that light-emitting elements that are regularly spaced apart by a predetermined interval, among the plurality of light-emitting elements, are turned off. The second frame F2 may be controlled in such a manner that the light-emitting elements that are irregularly spaced among the plurality of light-emitting elements are turned off. The processor 662 may control the second frame F2 of the brightness control interval CI in such a manner that the plurality of light-emitting elements are all in the on state during the second interval following the frame interval FI.

Accordingly, among the plurality of light-emitting elements, only light-emitting elements spaced apart by at least a predetermined interval may be turned off or may have a reduced brightness, thereby enabling selective adjustment of only the brightness of a region in which a plurality of specific sub-objects of an object, such as a vehicle located ahead, are arranged. Accordingly, the vehicle 1 may more efficiently recognize only specific sub-objects at a specific location of an object, such as a preceding vehicle, thereby improving recognition rates of the specific sub-objects.

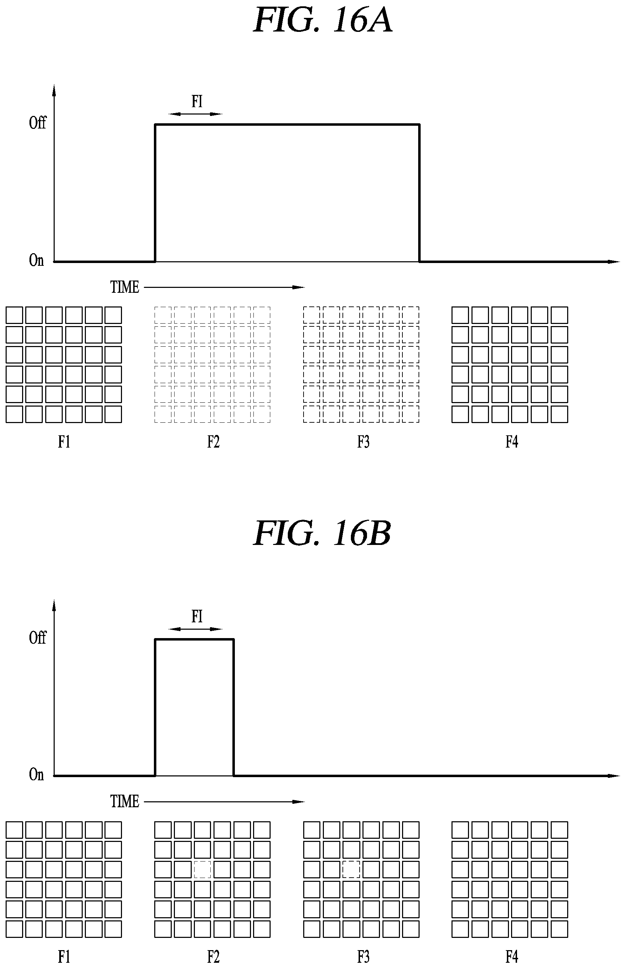

In the vehicle 1 that performs lamp control for object recognition according to the present disclosure, dimming control may be executed in such a manner that the brightness of each of the light-emitting elements is reduced. In this regard, FIG. 16A is a set including a timing diagram illustrating that dimming control is executed in such a manner that the brightness of each of the light-emitting elements is reduced, and a view illustrating respective light-emitting patterns of the light-emitting elements.

With reference to FIGS. 6 to 12B and FIG. 16A, the processor 662 of the lamp control unit 660 may control the first frame F1 of the brightness control interval CI in such a manner that the plurality of light-emitting elements are all in the on state during the first interval preceding the frame interval FI. The processor 662 may control the second frame F2 of the brightness control interval CI in such a manner that the plurality of light-emitting elements are all turned off. The processor 662 may control the third frame F3 of the brightness control interval CI in such a manner that the brightness of each of the plurality of light-emitting elements is reduced to a greater extent during the second interval following the frame interval FI than in the on state. The processor 662 may control the fourth frame F4 of the brightness control interval CI in such a manner that the plurality of light-emitting elements are all in the on state during the second interval following the frame interval FI.

Accordingly, even after an object, such as a vehicle located ahead, dimming control of the headlamp is executed, thereby not only reducing a timing error caused by the image acquisition time delay, but also preventing a decrease in safety due to turning off the headlamp. Dimming control may be executed in such a manner as to selectively adjust brightness only with respect to a region in which a specific sub-object of an object, such as a vehicle located ahead, is arranged. In this regard, FIG. 16B is a set including a timing diagram illustrating that dimming control is executed in such a manner that the brightness of each of some light-emitting elements is reduced, and a view illustrating respective light-emitting patterns of the light-emitting elements.

With reference to FIGS. 6 to 12B and FIG. 16B, the processor 662 of the lamp control unit 660 may control the first frame F1 of the brightness control interval CI during the first section preceding the frame interval FI. The processor 662 may control the second frame F2 of the brightness control interval CI in such a manner that one of the plurality of light-emitting elements is turned off. The processor 662 may control the third frame F3 of the brightness control interval CI in such a manner that the brightness of one of the plurality of light-emitting elements is reduced to a greater extent during the second interval following the frame interval FI than in the on state. The processor 662 may control the fourth frame F4 of the brightness control interval CI in such a manner that the plurality of light-emitting elements are all in the on state during the second interval following the frame interval FI. One of the plurality of light-emitting elements may be configured to irradiate light toward a specific sub-object of a vehicle located ahead of the vehicle.

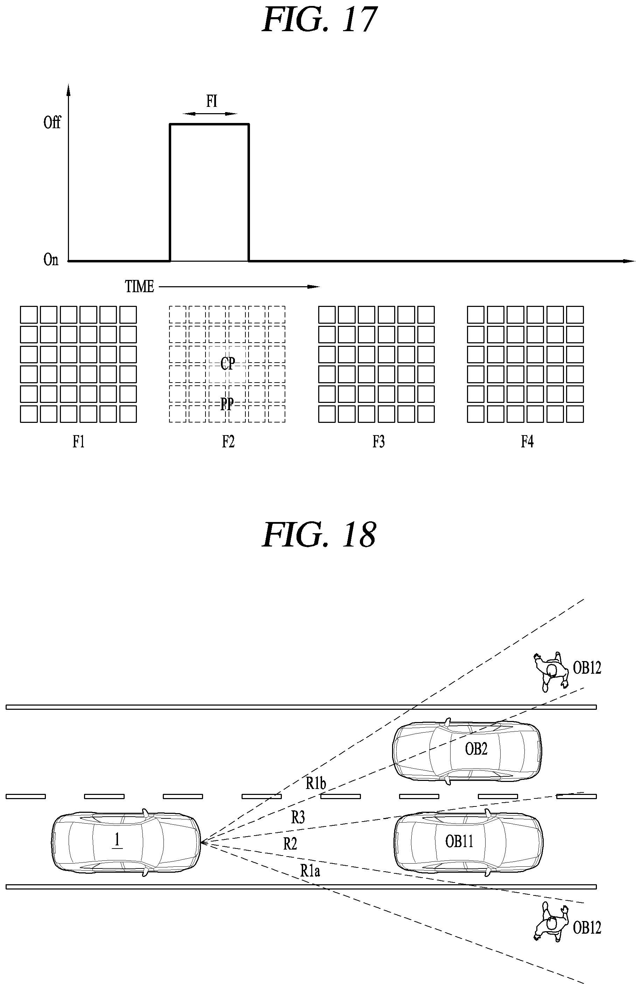

In the vehicle 1 that performs lamp control for improving object recognition according to the present disclosure, gradation control may be executed by making the brightness of the central portion and the peripheral portion of the headlamp 650 different. In this regard, FIG. 17 is a set including a timing diagram illustrating that gradation control is executed by making the brightness of a central portion and a peripheral portion of the headlamp 650 different, and a view illustrating respective light-emitting patterns of the light-emitting elements.

With reference to FIGS. 6 to 12B and FIG. 17, the processor 662 of the lamp control unit 660 may control the first frame F1 of the brightness control interval in such a manner that the plurality of light-emitting elements are all in the on state during the first section preceding the frame interval FI. The processor 662 may control the second frame F2 of the brightness control interval CI in such a manner that during the frame interval FI, some of the plurality of light-emitting elements are in a first brightness state and the other light-emitting elements are in a second brightness state. Some of the plurality of light-emitting elements may be arranged in a central portion CP of the headlamp 650. The others may be arranged in a peripheral portion PP of the headlamp 650. The processor 662 may control the third frame F3 of the brightness control interval CI in such a manner that the plurality of light-emitting elements are all in the on state during the second interval following the frame interval FI. The processor 662 may control the fourth frame F4 of the brightness control interval CI in such a manner that the plurality of light-emitting elements are all in the on state during the third interval following the second interval.

Accordingly, luminance control may be executed such that some of the plurality of light-emitting elements arranged at the central portion CP of the headlamp 650 are turned off or emit light at a low luminance in correspondence with the vehicular road that includes a vehicle located ahead, which is arranged in a central portion of an image. Luminance control may be executed such that some of the plurality of light-emitting elements arranged at the central portion CP of the headlamp 650 emit light at a higher luminance than the others arranged in the peripheral portion PP of the headlamp 650.

Among the plurality of light-emitting elements, only light-emitting elements that are spaced apart by at least a predetermined interval may be turned off or have a reduced brightness, thereby enabling selective adjustment of brightness only with respect to a region in which a plurality of specific sub-objects of an object, such as a vehicle located ahead, are arranged. Accordingly, the vehicle 1 may more efficiently recognize only specific sub-objects at a specific location of an object, such as a preceding vehicle, thereby improving recognition rates of the specific sub-objects.

In the vehicle 1 that performs lamp control for improving object recognition according to the present disclosure, control may be performed depending on whether external illumination, such as illumination from a streetlamp, is present. With reference to FIGS. 6 to 12B, when it is determined that external illumination is present, the processor 662 of the lamp control unit 660 may control the headlamp to be in the off state during the frame interval FI. When it is determined that external illumination is absent, the processor 662 may control the headlamp to be in the on state or to have brightness reduced to a greater extent than in the on state during the frame interval FI.

When the brightness of external illumination is lower than a threshold brightness, the processor 662 may control the headlamp to have brightness reduced to a greater extent than in the on state during the frame interval FI. When the brightness of external illumination is higher than the threshold brightness, the processor 662 may control the headlamp to be in the off state during the frame interval FI. When it is determined that external illumination is absent, the lamp control unit 660 may control the headlamp to be in the on state during the frame interval FI.

In the vehicle 1 that performs lamp control for performing object recognition according to the present disclosure, luminance control may be executed depending on whether a road is for vehicles or pedestrians. In this regard, FIG. 18 is a conceptual diagram for executing, through the headlamp of the vehicle, luminance control that varies depending on whether a road is for vehicles or pedestrians. With reference to FIG. 18, a different OB11, such as a vehicle located ahead on the vehicular road, may be detected. The vehicle 1 may detect a vehicle OB2 traveling in the opposite direction on the vehicular road. The vehicle 1 may detect pedestrians OB12 and OB12' on the pedestrian road.

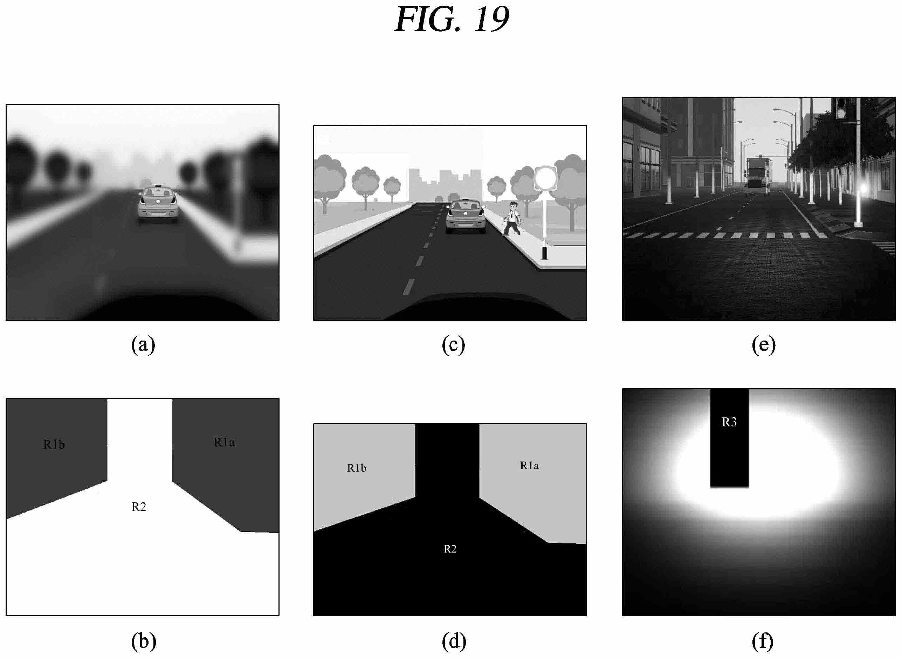

FIG. 19 is a set of views illustrating images captured per respective scenarios and beam patterns of the headlamp. With reference to FIG. 18 and (a) FIG. 19, the vehicle 1 may detect a different vehicle OB11, such as a vehicle located ahead. With reference to FIGS. 6, 7, 17, and 18, and (a) and (b) of FIG. 19, the central portion CP of the headlamp 650 that corresponds to a second region R2 of the vehicular road may be brought into the on state to detect the different vehicle OB11.

With reference to FIG. 18 and (c) of FIG. 19, the vehicle 1 may detect the pedestrian OB12 on the pedestrian road. With reference to FIGS. 6, 7, 17, 18, and (c) and (d) of FIG. 19, the peripheral portion PP of the headlamp 650 that corresponds to first regions R1a and R1b corresponding to the pedestrian road may be brought in the on state to detect the pedestrian OB12. The central portion CP of the headlamp 650 may be brought into the off state during the frame interval FI during which an image of the different vehicle OB11 is captured.

With reference to FIG. 18 and (e) of FIG. 19, the vehicle 1 may detect the vehicle OB2 in the opposite direction on the vehicular road. With reference to FIGS. 6, 7, 17, and 18, and (e) and (f) of FIG. 19, in a case where the vehicle OB2 in the opposite direction approaches, luminance control may be accordingly executed. Some of the light-emitting elements of the headlamp 650 corresponding to a third region 180R3 in which the vehicle OB2 in the opposite direction is located may be controlled to be turned off.

[With reference to FIGS. 6 to 12B and FIGS. 17 to 19, luminance control that varies depending on whether a road is for vehicles or for pedestrians will be described. The processor 662 of the lamp control unit 660 may control some of the plurality of light-emitting elements that correspond to the first regions R1a and R1b in which the pedestrian road is present, in such a manner as to be in the on state during the frame interval FI. The processor 662 may control the other light-emitting elements that correspond to the second region R2 in which the vehicular road is present, in such a manner as to be in the off state during the frame interval FI.

Among some of the plurality of light-emitting elements, first light-emitting elements may be arranged on a curved surface having a predetermined angle so as to point toward a first direction in which the pedestrian road is present. Accordingly, through the first-emitting elements, a pedestrian on the pedestrian road may be detected in a bright illumination state. Among the other light-emitting elements, second light-emitting elements may be arranged on a curved surface or a front surface that has a predetermined angle so as to point toward a second direction in which the vehicular road is present. Accordingly, through the second light-emitting elements, a different vehicle on the vehicular road may be detected by the front camera 110 in a dark illumination state.

The lamp control unit 660 may perform luminance control on the first regions R1a, R1b, the second region R2, and the third region R3. With reference to FIGS. 6 to 12B and FIGS. 17 to 19, luminance control of each region by the lamp control unit 660 will be described. The processor 662 of the lamp control unit 660 may control the central portion CP of the headlamp 650 that corresponds to the second region of the vehicular road, in such a manner that the central portion CP is brought into the on state to detect the vehicle OB11 ahead of the vehicle 1 during the first interval of the frame interval FI.

The processor 662 may control the peripheral portion PP of the headlamp 650 that corresponds to the first regions R1a and R1b corresponding to the pedestrian road, in such a manner that the peripheral portion PP is brought into the on state to detect the pedestrians OB12 and OB12' during the frame interval FI during which an image of the different vehicle OB11 is captured. The processor 662 may control the central CP of the headlamp 650 that corresponds to the second region R2 of the vehicular road, in such a manner that the central CP is brought into the off state during the frame interval FI during which the image of the different vehicle OB11 is captured.

In a case where the vehicle OB2 in the opposite direction of the vehicular road approaches, the processor 662 may control some of the light-emitting elements of the headlamp 650 that correspond to the third region R3 in which the vehicle OB2 in the opposite direction is present, in such a manner as to be turned off during the frame interval FI. Alternatively, the processor 662 may control some of the light-emitting elements of the headlamp 650 that correspond to the third region R3 in which the vehicle OB2 in the opposite direction is located, in such a manner as to have brightness reduced to a greater extent than in the on state.

Accordingly, when the vehicle in the opposite direction on the vehicular road approaches, movement of the vehicle in the opposite direction OB2 may be detected, and safety control may be performed. In addition, when the vehicle OB2 in the opposite direction on the vehicular road approaches, the movement of the vehicle OB2 in the opposite direction may be detected, and a corresponding portion of the headlamp 650 may be turned off or may have brightness reduced so as not to interfere with driving the vehicle OB2 in the opposite direction.

The lamp control unit 660 that executes lamp control for improving object recognition according to the present disclosure, as described above, may improve the accuracy level of object recognition by forming various patterns depending on the situation. With reference to FIGS. 6 to 19, the lamp control unit 660, which executes lamp control for improving the accuracy level of object recognition by forming various patterns depending on the situation, will be described.

The processor 662 of the lamp control unit 660 outputs light through the headlamp 650. When the shutter of the front camera 311 is opened, and the front camera 311 is driven, the processor 662 may execute on or off control, brightness control, and light-emitting pattern control of the headlamp 650. The processor 662 may form a gradient pattern in such a manner that the brightness gradually increases along the horizontal axis direction from the central point of the central region of the vehicular road in such a manner as to recognize an object in the central region thereof. The gradation pattern may be formed only in the second region R2 of the vehicular road. The brightness of the second region R2 of the pedestrian road may be set to be greater than that of the first regions R1a and R1b.

The processor 662 of the lamp control unit 660 may control the headlamp 650 in such a manner that an oblique-line pattern in which dark patterns and bright patterns are in the oblique-line direction is formed. The processor 662 may, in a specific direction, form oblique-line patterns having a third region and fourth regions formed on both sides, respectively, of the third region. The third region has first brightness, and the fourth regions has second brightness lower than the first brightness. The processor 662 may, through the fourth regions of the oblique-line patterns, recognize vehicles that make a left turn on a left-turn road formed in a specific direction or make a right turn at an intersection.

The processor 662 may control the headlamp 650 in such a manner that a checkered pattern in which dark patterns and bright patterns alternately appear along the horizontal and vertical axis directions is formed. The checkered pattern may be formed to have a structure in which bright regions and dark regions are alternately arranged along the horizontal axis direction and the perpendicular direction in a two-dimensional region. It may be determined, through the checkered patterns, whether a region of an object located ahead protrudes from a flat surface with respect to the other regions of the object. In this regard, a region indicating a vehicle registration number or state information of a vehicle located ahead may be formed to protrude with respect to the other regions.

The processor 662 of the lamp control unit 660 may form a checkered pattern in such a manner that a region of an object located ahead protrudes from a flat surface with respect to the other regions of the object. The processor 662 may form a checkered pattern in which bright patterns and dark patterns alternately repeat along the horizontal axis direction and the perpendicular direction in such a manner as to recognize a vehicle registration number or state information of a vehicle located ahead. The processor 662 may recognize the vehicle registration number or the state information of the vehicle located ahead based on the dark patterns of the checkered pattern. The vehicle registration number or the state information of the vehicle located ahead may be displayed to protrude to a greater extent than a background region (e.g., the license plate or a rear glass pane on which the state information is displayed) within a specific region of the vehicle located ahead. For example, a first plane on which an indicator for displaying the state information of a vehicle located ahead may be formed to protrude to a greater extent than a second plane on which the rear glass pane of the vehicle is formed.

The state information of a vehicle located ahead may be information associated with a brake state or an abnormal state of the vehicle located ahead. The brake state of a vehicle located ahead may be detected based on a distance to the vehicle located ahead or based on an on/off state of a brake light or the like. The abnormal state of a vehicle located ahead may be information displayed in an image detected through the front camera 311, on a rear glass pane of the vehicle located ahead, or on the cluster inside or outside the vehicle.

The processor 662 of the lamp control unit 660 may control the head lamp 650 in such a manner as to detect objects having different dark patterns and different bright patterns. Through dark patterns, the processor 662 may recognize a vehicle registration number or state information of a vehicle located ahead. At the same time, through bright patterns, the processor 662 may recognize either respective specific portions of pedestrians or objects on the pedestrian road. Accordingly, the vehicle may monitor a vehicle located ahead and, at the same time, may monitor respective states of pedestrians on the pedestrian road who intend to cross a crosswalk.

The processor 662 of the lamp control unit 660 may measure the brightness of an entire background that includes the vehicular road and the pedestrian road, and then may execute on or off control, brightness control, and light-emitting pattern control of the headlamp 650. In this regard, the processor 662 may measure the brightness of the entire background that includes the vehicular road and the pedestrian road based on the image captured by the front camera 311. The processor 662 may perform on or off control, brightness control, and light-emitting pattern control of the headlamp 650 based on first brightness of the vehicular road and second brightness of the pedestrian road. Under a nighttime condition in which streetlamps are turned on, the first brightness of the vehicular road may be set to be higher, by at least a threshold value, than the second brightness of the pedestrian road.

The processor 662 of the lamp control unit 660 may synthesize beam patterns in which a specific region of the headlamp 650 that corresponds to the vehicular road portion is in the off state, and the other regions thereof are in the on state. The processor 662 may detect a vehicle located ahead on the vehicular road and a pedestrian on the pedestrian road based on the beam pattern. When a vehicle located ahead transmits state information associated with the brake state or the abnormal state thereof, the processor 662 may form a checkered light-emitting pattern. The checkered light-emitting pattern may be formed in such a manner that bright patterns and dark patterns are alternately repeated along the horizontal axis direction and the perpendicular direction so as to recognize a vehicle registration number or state information of a vehicle located ahead.

The processor 662 of the lamp control unit 660 may recognize a vehicle registration number or state information of a vehicle located ahead based on dark patterns among the checkered patterns and, at the same time, may recognize either specific portions of pedestrians or an object on the pedestrian road. In addition, the processor 662 may detect vehicles that make a left turn on a left-turn lane or make a right turn at an intersection based on the oblique-line pattern according to a specific direction. In this regard, it may be firsthand whether the vehicular road is a left-turn road formed in a specific direction or an intersection.

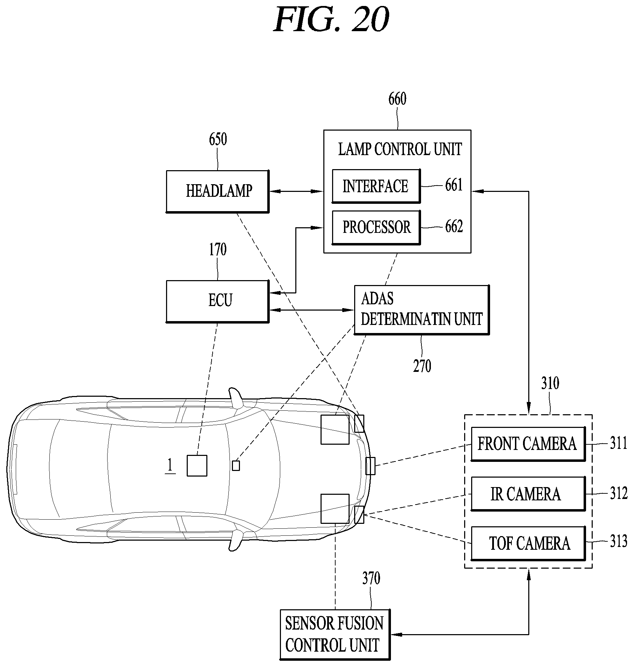

The vehicle 1 that performs lamp control for improving object recognition according to the present disclosure may detect a distance to an object located ahead of the vehicle using a plurality of cameras. In this regard, FIG. 20 is a block diagram illustrating the vehicle capable of detecting a distance to an object located ahead according to the present disclosure. With reference to FIG. 20, the vehicle 1 may further include an infrared (IR) camera 312, a TOF camera 313, and a sensor fusion control unit 370. Accordingly, the vehicle 1 may include the camera 310, the sensor fusion control unit 370, the headlamp 650, and the lamp control unit 660. The camera 310 may be configured to include the front camera 311, the IR camera 312, and the TOF camera 313.

With reference to FIGS. 1 to 20, the lamp control unit 660, which performs lamp control for improving object recognition according to the present disclosure, and the vehicle 1 including the lamp control unit 660, will be described. The IR camera 312 may be configured to capture a second image through an infrared signal and to detect a distance to an object located ahead of the vehicle. The TOF camera 313 may be configured to acquire a third image through a pulse-modulated infrared beam and to detect a distance to an object located ahead of the vehicle.

The fusion control unit 370 may use an image captured through the front camera 110, the second image captured through the IR camera 312, and the third image captured through the TOF camera 313. The sensor fusion control unit 370 may, through a plurality of images, detect the different vehicle OB11 located ahead of the vehicle on the vehicular road and the pedestrian OB12 and OB12' on the pedestrian road.

The lamp control unit 660 may be configured to include the interface 661 and the processor 662. The processor 662 of the lamp control unit 660 may control the sensor fusion control unit 370 in such a manner as to detect a different vehicle located ahead of the vehicle on the vehicular road and a pedestrian on the pedestrian road based on the image from the front camera 110, the second image from the IR camera 312, and the third image from the TOF camera 313. The processor 662 may control the starting and ending points of the brightness control interval CI of the headlamp 650 on the basis of a first distance to a second vehicle through the IR camera 312 and the TOF camera 313. The processor 662 may control the start point and the ending point of the brightness control section CI on the basis of the first distance to the second vehicle through the IR camera 312 and the TOF camera 313 in such a manner that the frame interval FI is included in the brightness control interval CI. The IR camera 312 may be configured to capture the second image through an infrared signal and to detect a distance to an object located ahead of the vehicle. The TOF camera 313 may be configured to capture the third image through the pulse-modulated infrared beam and to detect a distance to the object located ahead of the vehicle.

The lamp control unit 660 may control the head lamp 650 in such a manner as to simultaneously detect a pedestrian on the pedestrian road and a vehicle on the vehicular road. The processor 662 of the lamp control unit 660 may detect a second distance to a pedestrian and a location of the pedestrian through the front camera 311, the IR camera 312, and the TOF camera 313. The processor 662 may control some of the plurality of light-emitting elements that correspond to the first region in which the pedestrian road is present, on the basis of the location of the pedestrian that is detected through the sensor fusion control unit 370, in such a manner as to be in the on state during the frame interval FI. The processor 662 may control the other light-emitting elements that correspond to the second region in which the vehicular road is present, in such a manner as to be in the off state during the frame interval FI.

Among some of the plurality of light-emitting elements, the first light-emitting devices may be arranged on a curved surface having a predetermined angle so as to orient toward the first direction in which a pedestrian on the pedestrian road is present. Accordingly, a pedestrian on the pedestrian road may be detected in a state where the first-emitting elements are in the on state. Among the other light-emitting elements, the second light-emitting elements may be arranged on a curved surface or a front surface that has a predetermined angle to point toward the second direction in which the second vehicle on the vehicular road is present. Accordingly, through the second light-emitting elements, a different vehicle on the vehicular road may be detected by the front camera 110 in a dark illumination state. In addition, the IR camera 312 and the TOF camera 313 may detect a distance to a different vehicle and a direction thereof.

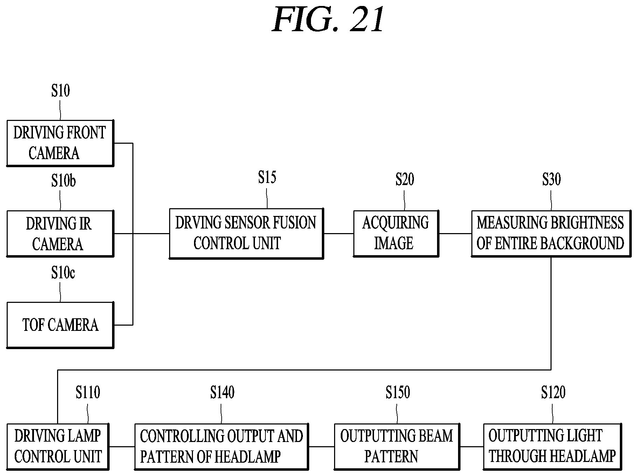

The lamp control method according to the present disclosure may be implemented on the basis of an image captured by a plurality of cameras. In this regard, FIG. 21 is a diagram illustrating the lamp control method configured to drive the lamp control unit after images are captured by the front camera, the IR camera, and the TOF camera.

With reference to FIGS. 20 and 21, the lamp control method may include driving steps S10, S10b, and S10c of driving a plurality of cameras, a sensor fusion control step S15 of driving the sensor fusion control unit, a brightness measurement step S30 of measuring the brightness of an entire background, and an output/pattern control step S140 of controlling an output and a pattern of the headlamp.

In the driving step S10 of driving the front camera 311, the shutter is opened, and the image acquisition step S20 may be performed. In the driving step S10b of driving the IR camera 312, an infrared signal is transmitted to an object, and the image acquisition step S20 may be performed. In the driving step S10c of driving the TOF camera 313, a pulse-modulated infrared beam is transmitted to an object, and the image acquisition step S20 may be performed.

In the sensor fusion control step S15, respective signals and beam transmission intervals of the front camera 311, the IR camera 312, and the TOF camera 313 may be controlled in such a manner that these cameras capture respective images. In the image acquisition step S20, the image corresponding to the opening of the shutter of the front camera 311, the second image based on an infrared signal of the IR camera 312, and the third image based on a pulse-modulated infrared beam of the TOF camera 313 may be acquired.

The second image may be acquired through an infrared signal, and a distance to an object located ahead of the vehicle may be detected. In the driving step S10c of operating the TOF camera 313, the third image may be acquired through the pulse-modulated infrared beam, and a distance to an object located ahead of the vehicle may be detected.

With reference to FIGS. 18 to 21, the brightness measurement step S30 and the steps subsequent thereto will be described. In the brightness measurement step S30, the brightness of an entire background image in which the vehicular road portion and the pedestrian road portion are included may be measured. Subsequently, the lamp control method may further include a first driving step S110 of driving the lamp control unit 660. The lamp control method may further include the beam pattern output step S150 of outputting a beam pattern of the headlamp and the output step S120 of outputting light through the headlamp.

In the output/pattern control step S140, the output and the pattern of the headlamp 650 may be controlled depending on conditions, such as surrounding circumstances and locations of objects, in such a manner that only a frame for acquiring a camera image is controlled while an existing pattern is maintained. In the beam pattern output step S150, a beam pattern of the headlamp 650 may be formed on the vehicular road portion and the pedestrian road portion in such a manner as to have different brightness levels or different patterns. In the output step S120, an optical signal having different brightness levels and different patterns may be output through the headlamp 650.

With reference to FIG. 8 and FIGS. 18 to 21, in the image acquisition step S220, images captured through the front camera 110, the IR camera 312, and the TOF camera 313 may be formed. In the object recognition step S230 of recognizing an object within an image, the different vehicle OB11 located ahead of the vehicle on the vehicular road and the pedestrian OB12 and OB12' on the pedestrian may be detected. Subsequently, in the recognized information utilization step S240, the information acquired through object recognition may be used for display on the vehicle information display window or for control and the like of various mechanical apparatuses and electronic devices of the vehicle that uses the information.

The vehicle that performs lamp control for improving object recognition according to the present disclosure has been described above. The technical effects of the vehicle that performs lamp control for improving object recognition according to the present disclosure may be summarized as follows, but the present disclosure is not limited to the following technical effects.

The technical features of a vehicle that performs lamp control for improving object recognition according to the present disclosure are summarized as follows.

According to the present disclosure, the timing for a shutter of a camera and the timing for a specific frame of a headlamp can be adjusted, thereby adjusting the specific frame of the headlamp and improving the performance of recognition of an object by the camera.

According to the present disclosure, the timing for the shutter of the camera and the timing for the specific frame of the headlamp can be set to be the same, or the timing for the specific frame can be set to be advanced by a predetermined time, thereby optimally improving the performance of object recognition.

According to the present disclosure, when a streetlamp is turned on, the headlamp can be turned off at an appropriate point in time before a shutter-opening operation of a front camera, thereby improving the performance of object recognition by a front camera of the vehicle.

According to the present disclosure, the plurality of light-emitting elements of the headlamp can be selectively controlled to have respective brightness on a region-by-region basis according to respective brightness states of the vehicular road and the pedestrian road, thereby improving the performance of recognition of objects, such as a vehicle located ahead and a pedestrian.

According to the present disclosure, since only a specific frame associated with the brightness control of the headlamp is changed, only the object recognition capability of the camera can be improved, without affecting the existing headlamp system familiar to the user, while complying with automotive headlamp regulations.

The present disclosure is not limited to the technical effects described above. From the following claims, other technical effects not mentioned will be apparent to a person of ordinary skill in the art to which the present disclosure pertains.

The present disclosure may be implemented in the form of computer-readable code recorded on a program-recorded medium. The computer-readable media include all types of recording devices capable of storing data that are readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like. In addition, the computer may also include a process or a control unit. Therefore, the detailed description should not be interpreted in a limited manner in all respects and should be considered as serving the purpose of illustration. The scope of the present disclosure should be determined by the proper interpretation of the following claims. All equivalent modifications to the embodiments of the present disclosure fall within the scope of the present disclosure.

## Claims

1. A lamp control unit comprising:
an interface operatively coupled to an electronic control unit (ECU) of a vehicle; and
a processor configured to receive control information of a headlamp from the ECU through the interface,
wherein the processor
controls an ADAS determination unit in such a manner that, based on an image of an object that is acquired from a front camera, the ADAS determination unit determines the object within the image,
receives the control information of the headlamp for irradiation toward the object from the ECU, and
turns off the headlamp or reduces the brightness thereof on the basis of the control information of the headlamp in such a manner that said turning off the headlamp or reducing the brightness thereof corresponds to a frame in which the front camera captures the image of the object.

2. The lamp control unit of claim 1, wherein ADAS determination information on the object determined by the ADAS determination unit is transmitted to the ECU of the vehicle,
wherein the control information of the headlamp, generated by the ECU according to the ADAS determination information, is transmitted to the headlamp control unit, and
wherein the processor controls the headlamp on the basis of the control information in such a manner that during the frame, the headlamp is turned off or has brightness reduced.

3. The lamp control unit of claim 1, wherein the processor sets a brightness control interval of the headlamp in such a manner that the headlamp is turned off or has brightness reduced during a frame interval during which the image of the object is captured by the camera,
wherein the starting point of the brightness control interval is set to be earlier than the starting point of the frame interval, and
wherein the ending point of the brightness control interval is set to be later than the ending point of the frame interval.

4. The lamp control unit of claim 3, wherein the processor
controls a first frame of the brightness control interval in such a manner that a plurality of light-emitting elements are all in an on state during a first interval preceding the frame interval,
controls a second frame of the brightness control interval in such a manner that the plurality of light-emitting elements are all in an off state during the frame interval, and
controls a third frame of the brightness control interval in such a manner that the plurality of light-emitting elements are all in the on state during a second interval following the frame interval.

5. The lamp control unit of claim 3, wherein the processor forms continuous frames of the brightness control interval in such a manner that a plurality of light-emitting elements are all in an off state during a plurality of intervals that include the frame interval.

6. The lamp control unit of claim 3, wherein the processor
controls a first frame of the brightness control interval in such a manner that a plurality of light-emitting elements are all in an on state during a first interval preceding the frame interval,
controls a second frame of the brightness control interval in such a manner that adjacent light-emitting elements, among the plurality of light-emitting elements, are turned off during the frame interval, and
controls a third frame of the brightness control interval in such a manner that the plurality of light-emitting elements are all in the on state during a second interval following the frame interval.

7. The lamp control unit of claim 3, wherein the processor
controls a first frame of the brightness control interval in such a manner that a plurality of light-emitting elements are all in an on state during a first interval preceding the frame interval,
controls a second frame of the brightness control interval in such a manner that light-emitting elements that are not adjacent to each other, among the plurality of light-emitting elements, are turned off during the frame interval, and
controls a third frame of the brightness control interval in such a manner that the plurality of light-emitting elements are all in the on state during a second interval following the frame interval.

8. The lamp control unit of claim 3, wherein the processor
controls a first frame of the brightness control interval in such a manner that a plurality of light-emitting elements are all in an on state during a first interval preceding the frame interval,
controls a second frame of the brightness control interval in such a manner that the plurality of light-emitting elements are all in an off state during the frame interval,
controls a third frame of the brightness control interval in such a manner that the brightness of each of the plurality of light-emitting elements is reduced during a second interval following the frame interval than in the on state, and
controls a fourth frame of the brightness control interval in such a manner that the plurality of light-emitting elements are all in the on state during a third interval following the second interval.

9. The lamp control unit of claim 3, wherein the processor
controls a first frame of the brightness control interval in such a manner that a plurality of light-emitting elements are all in an on state during a first interval preceding the frame interval,
controls a second frame of the brightness control interval in such a manner that one of the plurality of light-emitting elements is turned off during the frame interval,
controls a third frame of the brightness control interval in such a manner that the brightness of one of the plurality of light-emitting elements is reduced during a second interval following the frame interval than in the on state, and
controls a fourth frame of the brightness control interval in such a manner that the plurality of light-emitting elements are all in the on state during a third interval following the second interval, and
wherein the one of the plurality of light-emitting elements is configured to irradiate light toward a specific object of a vehicle located ahead of the vehicle.

10. The lamp control unit of claim 3, wherein the processor
controls a first frame of the brightness control interval in such a manner that a plurality of light-emitting elements are all in an on state during a first interval preceding the frame interval,
controls a second frame of the brightness control interval in such a manner that during the frame interval, some of the plurality of light-emitting elements are in a first brightness state and the other light-emitting elements are in a second brightness state, and
controls a third frame of the brightness control interval in such a manner that the plurality of light-emitting elements are all in the on state during a second interval following the frame interval, and
wherein some of the plurality of light-emitting elements are arranged in a central portion of the headlamp, and the other light-emitting elements are arranged in a peripheral portion of the headlamp.

11. The lamp control unit of claim 3, wherein when it is determined that external illumination is present, the processor controls the headlamp to be in an off state during the frame interval, and
wherein, when it is determined that the external illumination is absent, the processor controls the headlamp to be in an on state or to have brightness reduced than in the on state during the frame interval.

12. The lamp control unit of claim 11, wherein when the brightness of the external illumination is lower than a threshold brightness, the processor controls the headlamp to have brightness reduced than in the on state during the frame interval, and
wherein when the brightness of the external illumination is higher than the threshold brightness, the processor controls the headlamp to be in the off state during the frame interval.

13. The lamp control unit of claim 3, wherein the processor
controls some of the plurality of light-emitting elements that correspond to a first region in which a pedestrian road is present, in such a manner as to be in an on state during the frame interval, and
controls the other light-emitting elements that correspond to a second region in which a vehicular road is present, in such a manner as to be in an off state during the frame interval.

14. The lamp control unit of claim 3, wherein the processor
controls a central portion of the headlamp that corresponds to a second region of a vehicular road, in such a manner as to be in an on state to detect a different vehicle located ahead of the vehicle during a first interval preceding the frame interval,
controls a peripheral portion of the headlamp that corresponds to a first region corresponding to a pedestrian road, in such a manner as to be in the on state to detect a pedestrian during the frame interval in which an image of the different vehicle is captured, and
controls the central portion of the headlamp that corresponds to the second region of the vehicular road in such a manner as to be in an off state during the frame interval, and
wherein in a case where a vehicle in the opposite direction of the vehicular road approaches, the processor controls some of the light-emitting elements of the headlamp that correspond to a third region in which the vehicle in the opposite direction is present, in such a manner as to be turned off or have brightness reduced than in the on state during the frame interval.

15. The lamp control unit of claim 14, wherein the processor
controls a sensor fusion control unit in such a manner as to detect a different vehicle located ahead of the vehicle on the vehicular road and a pedestrian on the pedestrian road based on an image from the front camera, a second image from an IR camera, and a third image from a TOF camera, and
controls the starting and ending points of the brightness control interval of the headlamp on the basis of a first distance to the different vehicle through the IR camera and the TOF camera in such a manner that the frame interval is included in the brightness control interval,
wherein the IR camera is configured to capture a second image through an infrared signal and to detect a distance to an object located ahead of the vehicle, and
wherein the TOF camera is configured to capture the third image through a pulse-modulated infrared beam and to detect a distance to the object located ahead of the vehicle.

16. The lamp control unit of claim 15, wherein the processor
controls the sensor fusion control unit in such a manner as to detect a second distance to a pedestrian and a location of the pedestrian through the front camera, the IR camera, and the TOF camera,
controls some of the plurality of light-emitting elements that correspond to a first region in which the pedestrian road is present, on the basis of the location of the pedestrian, in such a manner as to be in the on state during the frame interval, and
controls the other light-emitting elements that correspond to a second region in which the vehicular road is present, in such a manner as to be in the off state during the frame interval.

17. The lamp control unit of claim 13, wherein the processor
outputs light through the headlamp and, when a shutter of the front camera is opened and the front camera is driven, executes on or off control, brightness control, and light-emitting pattern control of the headlamp, and
forms a gradient pattern in such a manner that the brightness gradually increases along a horizontal axis direction from the central point of the central region in such a manner as to recognize an object in the central region thereof, and
wherein the gradation pattern is formed only in the first region of the vehicular road, and the brightness of the second region of the pedestrian road is set to be greater than that of the first region.

18. The lamp control unit of claim 13, wherein the processor
forms, in a specific direction, oblique-line patterns having a third region and fourth regions formed on both sides, respectively, of the third region, the third region having first brightness and the fourth regions having second brightness lower than the first brightness, and
recognizes, through the fourth regions of the oblique-line patterns, vehicles that make a left turn on a left-turn road formed in the specific direction.

19. The lamp control unit of claim 13, wherein the processor
forms a checkered pattern in which bright patterns and dark patterns alternately repeat along a horizontal axis direction and a perpendicular direction in such a manner as to recognize a vehicle registration number or state information of a vehicle located ahead,
recognizes, based on the dark patterns, the vehicle registration number or the state information of the vehicle located ahead, which are displayed to protrude to a greater extent than a background region within a specific region of the vehicle located ahead, and
recognizes, based on the bright patterns, respective states of pedestrians on the pedestrian road.

20. The lamp control unit of claim 13, wherein the processor
measures the brightness of an entire background including the vehicular road and the pedestrian road based on the image captured by the front camera,
performs on or off control, brightness control, and light-emitting pattern control of the headlamp on the basis of first brightness of the vehicular road and second brightness of the pedestrian road,
synthesizes beam patterns in which a specific region of the headlamp that corresponds to the vehicular road portion is in the off state and the other regions of the headlamp are in the on state,
detects a vehicle located ahead on the vehicular road and a pedestrian on the pedestrian road based on the beam pattern,
forms a checkered pattern in which bright patterns and dark patterns alternately repeat along a horizontal axis direction and a perpendicular direction in such a manner as to recognize a vehicle registration number or state information of the vehicle located ahead, when the vehicle located ahead transmits the state information associated with a brake state or an abnormal state of the vehicle,
recognizes the vehicle registration number or the state information of the vehicle located ahead based on the dark patterns, and,
when the vehicular road is a left-turn road formed in a specific direction,
detects vehicles that make a left turn on the left-turn road, based on oblique-line patterns according to the specific direction.
